(19) Europäisches Patentamt
European Patent Office
Office européen des brevets

(11) **EP 4 194 436 A1**

(12) **EUROPEAN PATENT APPLICATION**
published in accordance with Art. 153(4) EPC

(43) Date of publication:
**14.06.2023 Bulletin 2023/24**

(21) Application number: **21894703.4**

(22) Date of filing: **17.11.2021**

(51) International Patent Classification (IPC):
*C07C 319/02* (2006.01)    *C07C 319/20* (2006.01)
*C07C 319/28* (2006.01)    *C07C 321/14* (2006.01)
*C08J 11/24* (2006.01)    *C08J 11/28* (2006.01)
*C08G 18/38* (2006.01)    *G02B 1/00* (2006.01)
*G02B 1/04* (2006.01)

(52) Cooperative Patent Classification (CPC):
C07C 319/02; C07C 319/20; C07C 319/28;
C07C 321/14; C08G 18/38; C08J 11/24;
C08J 11/28; G02B 1/00; G02B 1/04; Y02W 30/62

(86) International application number:
**PCT/JP2021/042341**

(87) International publication number:
**WO 2022/107830 (27.05.2022 Gazette 2022/21)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.11.2020    JP 2020192462**
**30.07.2021    JP 2021125570**

(71) Applicant: **Mitsui Chemicals, Inc.**
**Tokyo 104-0028 (JP)**

(72) Inventors:
• **MURAKAMI, Masakazu**
  **Omuta-shi, Fukuoka 836-8610 (JP)**
• **NAKANO, Shotaro**
  **Omuta-shi, Fukuoka 836-8610 (JP)**

(74) Representative: **Mewburn Ellis LLP**
**Aurora Building**
**Counterslip**
**Bristol BS1 6BX (GB)**

(54) **METHOD FOR PRODUCING THIOURETHANE RESIN STARTING MATERIAL AND APPLICATION THEREOF**

(57)    A method of producing a thiourethane resin raw material, the method comprising a reaction step of generating a thiourethane resin raw material by contacting a composition X, which comprises a thiourethane resin and a foreign material, and an active hydrogen compound with each other, and thereby reacting the thiourethane resin in the composition X, and the active hydrogen compound, with each other.

EP 4 194 436 A1

**Description**

Technical Field

The present disclosure relates to: a method of producing a thiourethane resin raw material; and an application thereof.

Background Art

Plastic lenses, which are resin-containing lenses, are lightweight, hardly breakable, and dyeable as compared to inorganic lenses; therefore, in recent years, the use of plastic lenses as eyeglass lenses, camera lenses, and the like has been rapidly increased.
For example, various studies have been conducted on thiourethane resin-containing lenses (see, for example, the following Patent Documents 1 to 3).

Patent Document 1: Japanese Patent Application Laid-Open (JP-A) No. S63-46213
Patent Document 2: JP-A No. H2-270859
Patent Document 3: JP-A No. H7-252207

SUMMARY OF THE INVENTION

Technical Problem

As raw materials for the production of a thiourethane resin (hereinafter, also referred to as "thiourethane resin raw materials"), a polythiol composition and a polyisocyanate compound are usually used. The polyisocyanate compound is produced from, for example, a polyamine compound. The polyamine compound that is a raw material of the polyisocyanate compound also falls under "thiourethane resin raw materials" (i.e., raw materials for the production of a thiourethane resin). Further, a compound used as a raw material of this polyamine compound (e.g., a polyurea compound or a polycarbamate compound) also falls under "thiourethane resin raw materials".
Thiourethane resin-containing lenses contain a foreign material (i.e., a component other than the thiourethane resin) in some cases.
A lens that contains a thiourethane resin and a foreign material is produced by milling a formed body obtained by molding a composition containing the thiourethane resin and the foreign material (hereinafter, also referred to as "composition X"). In this process, a large amount of milling swarf containing the thiourethane resin and the foreign material is generated. Conventionally, such milling swarf generated in a large amount is simply disposed without being effectively utilized.
However, from the standpoint of effective utilization of materials (i.e., recycle), a technology for producing a thiourethane resin raw material using, as a starting material, the thiourethane resin contained in such milling swarf is desired. The resulting thiourethane resin raw material can be used as a raw material of a new thiourethane resin.
Further, a technology for producing a thiourethane resin raw material using a thiourethane resin as a starting material, which is not limited to the use of a thiourethane resin contained in a milling swarf as a starting material, is desired.
An object of one aspect of the disclosure is to provide: a method of producing a thiourethane resin raw material, by which a thiourethane resin raw material can be produced using a composition X containing a thiourethane resin and a foreign material as a starting material; and an application thereof.

Solution to Problem

Means for solving the above-described problems encompass the following aspects.

<1> A method of producing a thiourethane resin raw material, the method comprising a reaction step of generating a thiourethane resin raw material by contacting a composition X, which comprises a thiourethane resin and a foreign material, and an active hydrogen compound with each other, and thereby reacting the thiourethane resin in the composition X and the active hydrogen compound with each other.
<2> The method of producing a thiourethane resin raw material according to <1>, wherein the foreign material comprises at least one selected from the group consisting of a resin other than the thiourethane resin, a polymerization catalyst, a metal, a UV absorber, an internal mold release agent, a plasticizer, a dye, a machine oil, and water.
<3> The method of producing a thiourethane resin raw material according to <1> or <2>, wherein the thiourethane resin raw material comprises at least one selected from the group consisting of a polythiol composition, a polyurea compound, a polycarbamate compound, a polyamine compound, a polyisocyanate compound, and a polyurethane compound.

<4> The method of producing a thiourethane resin raw material according to any one of <1> to <3>, wherein the active hydrogen compound is at least one selected from the group consisting of an amine compound and an alcohol compound.

<5> The method of producing a thiourethane resin raw material according to any one of <1> to <4>, wherein the reaction step is a step of obtaining a reaction mixture comprising the thiourethane resin raw material by contacting the composition X and the active hydrogen compound with each other in the presence of a reaction solvent, and thereby reacting the thiourethane resin in the composition X and the active hydrogen compound with each other, and the method further comprises a separation step of separating the thiourethane resin raw material from the reaction mixture comprising the thiourethane resin raw material.

<6> The method of producing a thiourethane resin raw material according to <5>, wherein

the thiourethane resin raw material comprises a polythiol composition, and

the separation step comprises:

filtering the reaction mixture comprising the thiourethane resin raw material to obtain a filtrate comprising the polythiol composition;

adding an alkali metal-containing base and then water to the filtrate comprising the polythiol composition to perform extraction and thereby obtain a water extract comprising an alkali metal salt of the polythiol composition;

adding an acid to the water extract comprising an alkali metal salt of the polythiol composition to obtain an aqueous liquid comprising the polythiol composition;

adding an extraction solvent to the aqueous liquid comprising the polythiol composition to perform extraction and thereby obtain an extract comprising the polythiol composition; and

separating the polythiol composition from the extract comprising the polythiol composition.

<7> The method of producing a thiourethane resin raw material according to any one of <1> to <6>, wherein the composition X is collected in at least one of an eyeglass lens production process, an eyeglass production process, or an eyeglass disposal process.

<8> The method of producing a thiourethane resin raw material according to any one of <1> to <7>, wherein the composition X comprises a milling swarf comprising the thiourethane resin and the foreign material.

<9> A method of producing a polymerizable composition, the method comprising:

a step of producing a thiourethane resin raw material by the method of producing a thiourethane resin raw material according to any one of <1> to <8>; and

a step of producing a polymerizable composition by using at least a portion of the thiourethane resin raw material as at least a portion of a raw material.

<10> A method of producing a resin, the method comprising:

a step of producing a polymerizable composition by the method of producing a polymerizable composition according to <9>; and

a step of obtaining a resin by curing the polymerizable composition.

<11> A method of producing a resin-containing formed body, the method comprising:

a step of producing a polymerizable composition by the method of producing a polymerizable composition according to <9>; and

a step of obtaining a resin-containing formed body by curing the polymerizable composition.

<12> A method of producing an optical material comprising a resin-containing formed body, the method comprising:

a step of producing a polymerizable composition by the method of producing a polymerizable composition according to <9>; and

a step of obtaining a resin-containing formed body by curing the polymerizable composition.

<13> A method of producing a lens comprising a resin-containing formed body, the method comprising:

a step of producing a polymerizable composition by the method of producing a polymerizable composition according to <9>; and
a step of obtaining a resin-containing formed body by curing the polymerizable composition.

<14> A polymerizable composition, comprising at least a portion of a thiourethane resin raw material obtained by the method of producing a thiourethane resin raw material according to any one of <1> to <8>.
<15> A resin, which is a cured product of the polymerizable composition according to <14>.
<16> A formed body, comprising the resin according to <15>.
<17> An optical material, comprising the formed body according to <16>.
<18> A lens, comprising the formed body according to <16>.

Advantageous Effects of Invention

According to one aspect of the disclosure, a method of producing a thiourethane resin raw material, by which a thiourethane resin raw material can be produced using a composition X containing a thiourethane resin and a foreign material as a starting material, and an application thereof are provided.

DESCRIPTION OF EMBODIMENTS

In the disclosure, those numerical ranges that are expressed with "to" each denote a range that includes the numerical values stated before and after "to" as the lower limit value and the upper limit value, respectively.
In the disclosure, the term "step" encompasses not only a discrete step but also a step that cannot be clearly distinguished from other steps, as long as the intended purpose of the step is achieved.
In the disclosure, when there are plural substances that correspond to a component of a composition, the indicated amount of the component in the composition means, unless otherwise specified, a total amount of the plural substances existing in the composition.
In a set of numerical ranges that are stated in a stepwise manner in the disclosure, the upper limit value or the lower limit value of one numerical range may be replaced with the upper limit value or the lower limit value of other numerical range. Further, in a numerical range stated in the disclosure, the upper limit value or the lower limit value of the numerical range may be replaced with a relevant value indicated in any of Examples.

[Method of Producing Thiourethane Resin Raw Material]

The method of producing a thiourethane resin raw material according to the disclosure includes a reaction step of generating a thiourethane resin raw material by contacting a composition X, which contains a thiourethane resin and a foreign material, and an active hydrogen compound with each other, and thereby reacting the thiourethane resin in the composition X and the active hydrogen compound with each other.
According to the method of producing a thiourethane resin raw material according to the disclosure, a thiourethane resin raw material can be produced as a target material by using, as a starting material, a composition X containing a thiourethane resin and a foreign material.
In the reaction step, the thiourethane resin is chemically decomposed as a result of a reaction thereof with the active hydrogen compound, whereby a thiourethane resin raw material that is a target material is generated.

<Reaction Step>

The reaction step is a step of generating a thiourethane resin raw material by contacting a composition X, which contains a thiourethane resin and a foreign material, and an active hydrogen compound with each other, and thereby reacting the thiourethane resin in the composition X, and the active hydrogen compound, with each other.
A method of contacting the composition X and the active hydrogen compound with each other is not particularly limited, and one example thereof is a method of charging the composition X and the active hydrogen compound (and a reaction solvent if necessary) to a reaction vessel and stirring the charged materials. In this example, the order of charging the composition X and the active hydrogen compound (and a reaction solvent if necessary) to the reaction vessel is not particularly limited.

(Composition X)

The composition X is one of starting materials used in the reaction step.
The composition X contains a thiourethane resin and a foreign material.

The composition X, if necessary, may contain other components.

The composition X is preferably a composition collected in at least one of an eyeglass lens production process, an eyeglass production process, or an eyeglass disposal process. According to this aspect, recycle of the thiourethane resin as an eyeglass lens material is realized.

It is noted here that:

the "eyeglass lens production process" means a process of producing a resin by mixing and cast-polymerizing monomers that are raw materials of the resin, and/or a process of obtaining an eyeglass lens by milling a resin formed body;

the "eyeglass production process" means a process of producing an eyeglass by combining eyeglass lenses and other members such as an eyeglass frame with each other; and

the "eyeglass disposal process" means a process of disposing of, for example, an eyeglass that has been produced but is no longer needed, or a used eyeglass.

In all of these processes, the composition X containing a thiourethane resin, which is an eyeglass lens material, and a foreign material may be generated as a waste.

In the present aspect, the composition X generated in at least one of these processes is used as a starting material, and the thiourethane resin contained in this composition X and an active hydrogen compound are reacted with each other to obtain a thiourethane resin raw material that is a decomposition product of the thiourethane resin.

-Thiourethane Resin-

The composition X contains at least one thiourethane resin.

As the thiourethane resin, any known thiourethane resin can be used, and examples thereof include those thiourethane resins that are described in known documents, such as JP-A No. S63-46213, JP-ANo. H2-270859, JP-ANo. H7-252207, JP-ANo. S60-199016, JP-ANo. S60-217229, WO 2007/052329, and WO 2008/047626.

The content of the thiourethane resin in the composition X is preferably not less than 80% by mass, more preferably not less than 90% by mass, with respect to a total amount of the composition X.

The thiourethane resin usually contains a polymer of an isocyanate compound and a polythiol composition. In other words, the thiourethane resin is usually produced using an isocyanate compound and a polythiol composition as raw materials.

-Isocyanate Compound as Raw Material of Thiourethane Resin-

The isocyanate compound as a raw material of the thiourethane resin may be used singly, or in combination of two or more kinds thereof.

Examples of the isocyanate compound as a raw material of the thiourethane resin include those known isocyanate compounds that are described in the aforementioned known documents.

The isocyanate compound as a raw material of the thiourethane resin preferably contains a polyisocyanate compound containing two or more isocyanato groups.

The isocyanate compound as a raw material of the thiourethane resin preferably contains a diisocyanate compound containing two isocyanate groups,

more preferably contains at least one (hereinafter, also referred to as "isocyanate component A") selected from the group consisting of pentamethylene diisocyanate, hexamethylene diisocyanate, *m*-xylylene diisocyanate, isophorone diisocyanate, bis(isocyanatomethyl)cyclohexane, bis(isocyanatocyclohexyl)methane, 2,5-bis(isocyanatomethyl)bicyclo-[2.2.1]-heptane, 2,6-bis(isocyanatomethyl)bicyclo-[2.2.1]-heptane, tolylene diisocyanate, 4,4'-diphenylmethane diisocyanate, and phenylene diisocyanate,

still more preferably contains the isocyanate component A as a main component.

From the standpoint of the performance [for example, optical properties (e.g., refractive index and/or Abbe number), heat resistance, and specific gravity d] of the thiourethane resin, the isocyanate compound as a raw material of the thiourethane resin yet still more preferably contains at least one (hereinafter, also referred to as "isocyanate component N1") selected from the group consisting of *m*-xylylene diisocyanate, 2,5-bis(isocyanatomethyl)bicyclo-[2.2.1]-heptane, and 2,6-bis(isocyanatomethyl)bicyclo-[2.2.1]-heptane,

further more preferably contains the isocyanate component N1 as a main component.

-Polythiol Composition as Raw Material of Thiourethane Resin-

The polythiol composition as a raw material of the thiourethane resin may be used singly, or in combination of two or more kinds thereof.

The term "polythiol composition" used herein means a composition containing at least one polythiol compound.

It is noted here that the polythiol compound is not particularly limited as long as it is a compound containing two or more thiol groups (other name: mercapto groups).

The polythiol composition may also contain, as an impurity, a component other than the polythiol compound.

It is preferred that the polythiol composition contains at least one polythiol compound as a main component.

It is noted here that "the polythiol composition contains at least one polythiol compound as a main component" means that a total content of the at least one polythiol compound is not less than 50% with respect to a total amount of the polythiol composition.

The total content of the at least one polythiol compound with respect to the total amount of the polythiol composition is preferably not less than 60%, more preferably not less than 70%, still more preferably not less than 80%.

Similarly, in the disclosure, a feature that a composition contains a certain component (hereinafter, referred to as "component X") "as a main component" means that the content of the component X (when the component X consists of two or more compounds, a total content of the two or more compounds) is not less than 50% with respect to a total amount of the composition.

The content of the component X as a main component with respect to the total amount of the composition is preferably not less than 60%, more preferably not less than 70%, still more preferably not less than 80%.

The "%" in the description of the above-described expression "contain ... as a main component" means a ratio (% by area) of a total area of all peaks of the component X (e.g., at least one polythiol compound) with respect to a total area of all peaks of the composition (e.g., a polythiol composition), which ratio is determined by high-performance liquid chromatography.

Examples of the polythiol compound contained in the polythiol composition as a raw material of the thiourethane resin include those known polythiol compounds that are described in the aforementioned known documents.

The polythiol composition as a raw material of the thiourethane resin preferably contains at least one (hereinafter, also referred to as "polythiol component T") selected from the group consisting of

> 4-mercaptomethyl-1,8-dimercapto-3,6-dithiaoctane,
> 4,8-dimercaptomethyl-1,11-dimercapto-3,6,9-trithiaundecane,
> 4,7-dimercaptomethyl-1,11-dimercapto-3,6,9-trithiaundecane,
> 5,7-dimercaptomethyl-1,11-dimercapto-3,6,9-trithiaundecane,
> pentaerythritol tetrakis(2-mercaptoacetate),
> pentaerythritol tetrakis(3-mercaptopropionate),
> 2,5-dimercaptomethyl-1,4-dithiane,
> bis(2-mercaptoethyl) sulfide, and
> diethylene glycol bis(mercaptopropionate).

The polythiol composition more preferably contains the polythiol component T as a main component.

In this case, the polythiol composition may contain at least one other component (e.g., other polythiol compound or a component other than the polythiol compound) in addition to the polythiol component T.

Examples of the other polythiol compound include methanedithiol, 1,2-ethanedithiol, 1,2,3-propanetrithiol, tetrakis(mercaptomethylthiomethyl)methane, tetrakis(2-mercaptoethylthiomethyl)methane, tetrakis(3-mercaptopropylthiomethyl)methane, bis(2,3-dimercaptopropyl) sulfide, 2,5-dimercapto-1,4-dithiane, 2,5-dimercaptomethyl-2,5-dimethyl-1,4-dithiane, 1,1,3,3-tetrakis(mercaptomethylthio)propane, 1,1,2,2-tetrakis(mercaptomethylthio)ethane, and 4,6-bis(mercaptomethylthio)-1,3-dithiane.

Examples of a more specific aspect of the polythiol composition as a raw material of the thiourethane resin include:

> an aspect in which the polythiol composition contains 4-mercaptomethyl-1,8-dimercapto-3,6-dithiaoctane (hereinafter, also referred to as "polythiol component T1") as a main component;
> an aspect in which the polythiol composition contains 4,8-dimercaptomethyl-1,11-dimercapto-3,6,9-trithiaundecane, 4,7-dimercaptomethyl-1,11-dimercapto-3,6,9-trithiaundecane, and 5,7-dimercaptomethyl-1,11-dimercapto-3,6,9-trithiaundecane (hereinafter, these three compounds are also collectively referred to as "polythiol component T2") as main components;
> an aspect in which the polythiol composition contains pentaerythritol tetrakis(3-mercaptopropionate) (hereinafter, also referred to as "polythiol component T3") as a main component;

an aspect in which the polythiol composition contains, as main components, the polythiol component T1 and the polythiol component T3; and

an aspect in which the polythiol composition contains, as main components, the polythiol component T2 and the polythiol component T3.

The polythiol composition of each of the above-described aspects may contain at least one other component (e.g., other polythiol compound or a component other than the polythiol compound) in addition to the main component(s).

-Foreign Material-

The composition X contains at least one foreign material.

The term "foreign material" used herein means a component other than the thiourethane resin.

The foreign material preferably contains at least one selected from the group consisting of a resin other than the thiourethane resin, a polymerization catalyst, a metal, a UV absorber, an internal mold release agent, a plasticizer, a dye, a machine oil, and water.

The resin other than the thiourethane resin is not particularly limited.

The scope of a resin mixture containing a thiourethane resin and a resin other than the thiourethane resin includes, for example:

a hybrid material of a thiourethane resin and a urethane resin, which is produced by adding a polyol compound to a raw material in the production of the thiourethane resin; and

a hybrid material of a thiourethane resin and a urea resin, which is produced by adding a polyamine compound to a raw material in the production of the thiourethane resin.

Further, the resin other than the thiourethane resin preferably contains at least one selected from the group consisting of a polycarbonate resin, a polyallylcarbonate resin, an acrylic resin, a urethane resin, and an episulfide resin.

These resins can also be obtained as eyeglass lens materials in the same manner as a thiourethane resin.

Examples of the resin other than the thiourethane resin include:

a polyolefin film that protects the surface of a resin formed body for eyeglass lens production;

a hard coat or a primer coat that protects the surface of a resin formed body used eyeglass lens production;

an abrasive agent used for grinding a resin formed body for eyeglass lens production;

a resin material used for immobilizing a resin formed body for eyeglass lens production during milling of the resin formed body; and

a tape or a tape glue that is used for immobilizing a glass mold used in the preparation of a resin formed body for eyeglass lens production.

The polymerization catalyst is, for example, a polymerization catalyst used for the formation of a thiourethane resin (i.e., polymerization of monomers).

Examples of the polymerization catalyst include tertiary amine compounds, inorganic and organic acid salts thereof, metal compounds, quaternary ammonium salts, and organic sulfonic acids.

The metal is, for example, a pure metal or an alloy.

Specific examples of the metal include:

pure metals of Al, Ti, Zr, Au, Pt, Ag, Cu, Fe, Bi, Pb, Sn, In, Ga, and the like; and

alloys (e.g., stainless steel) containing at least one pure metal element.

The metal can be incorporated into the thiourethane resin in, for example, at least one of an eyeglass lens production process, an eyeglass production process, or an eyeglass disposal process.

The UV absorber, the internal mold release agent, and the dye may each be added to the thiourethane resin used for, for example, the production of a lens (e.g., an eyeglass lens). With regard to specific examples of these components, reference can be made to other components that may be contained in a polymerizable composition. As for the UV absorber, reference can also be made to the UV absorbers that may be used in the production method according to the below-described embodiment A.

The plasticizer may be contained in, for example, a gasket used for retaining casting molds at the time of producing a formed body of the thiourethane resin by cast polymerization.

The machine oil and water are each used, for example, at the time of grinding and/or polishing a formed body of the thiourethane resin for the production of a lens (i.e., an eyeglass lens), and can be incorporated into the resulting thiourethane resin swarf in this process.

The foreign material may also contain other components in addition to the above-described components.

With regard to other components that may be contained in the foreign material, reference can be made to other components that may be contained in the below-described polymerizable composition.

When a total amount of the thiourethane resin in the composition X is taken as 100 parts by mass, the content of the foreign material in the composition X is preferably from 0.001 parts by mass to 150 parts by mass, more preferably from 0.001 parts by mass to 100 parts by mass, still more preferably from 0.001 parts by mass to 10 parts by mass, yet still more preferably from 0.01 parts by mass to 5 parts by mass, further more preferably from 0.01 parts by mass to 3 parts by mass.

A total content of the thiourethane resin and the foreign material in the composition X is preferably from 80% by mass to 100% by mass, more preferably from 90% by mass to 100% by mass, with respect to a total amount of the composition X.

-Swarf-Form Composition X Containing Thiourethane Resin and Foreign Material-

The composition X is preferably a swarf-form composition containing the thiourethane resin and the foreign material.

In other words, in the reaction step, it is preferred to contact, as the composition X, a swarf-form composition containing the thiourethane resin and the foreign material (hereinafter, also referred to as "swarf-form composition X"), and an active hydrogen compound with each other to cause the thiourethane resin in the swarf-form composition X and the active hydrogen compound to react with each other. By this, the efficiency of the reaction between the thiourethane resin and the active hydrogen compound can be further improved.

A method of contacting the swarf-form composition X and the active hydrogen compound with each other is not particularly limited, and one example thereof is a method of charging the swarf-form composition X and the active hydrogen compound (and a reaction solvent if necessary) to a reaction vessel and stirring the charged materials. In this example, the order of charging the swarf-form composition X and the active hydrogen compound (and a reaction solvent if necessary) to the reaction vessel is not particularly limited.

The swarf-form composition X is preferably a milling swarf (encompassing the concept of ground swarf; the same applies hereinafter) containing the thiourethane resin and the foreign material.

A milling swarf of a formed body containing the thiourethane resin and the foreign material is generated in, for example, the process of producing an optical material (e.g., a lens) by milling the formed body containing the thiourethane resin and the foreign material.

(Active Hydrogen Compound)

In the reaction step, the active hydrogen compound functions as a decomposition agent against the thiourethane resin in the composition X that is a starting material.

From the standpoint of this function, the active hydrogen compound is preferably at least one selected from the group consisting of an amine compound and an alcohol compound.

-Amine Compound-

As the amine compound which is a preferred active hydrogen compound, any known amine compound can be used with no particular limitation.

In the reaction step, the amine compound may be used singly, or in combination of two or more kinds thereof.

From the standpoint of further improving the reactivity of the thiourethane resin and the amine compound, the molecular weight of the amine compound is preferably 1,000 or less, more preferably 500 or less, still more preferably 300 or less, yet still more preferably 200 or less.

A lower limit of the molecular weight of the amine compound is, for example, not less than 45, preferably not less than 59, more preferably not less than 60.

The amine compound is preferably an amine compound which contains at least one of an amino group or a monoalkylamino group, and has a total number of amino groups and monoalkylamino groups of from 1 to 6 (preferably from 1 to 3, more preferably 1 or 2).

One preferred example of the amine compound is an amine compound of 300 or less in molecular weight, which contains at least one of an amino group or a monoalkylamino group, and has a total number of amino groups and monoalkylamino groups of 1 or 2.

Specific examples of the amine compound include alkylamines having from 2 to 10 carbon atoms, aralkylamines having from 7 to 10 carbon atoms (e.g., benzylamine), dialkylamines having from 2 to 10 carbon atoms (e.g., di-n-butylamine), alkyldiamines having from 2 to 10 carbon atoms (e.g., ethylenediamine and bis(2-aminoethyl)ether), alkyltriamines having from 2 to 10 carbon atoms (e.g., bis(2-aminoethyl)amine), hydroxyalkylamines having from 2 to 10 carbon atoms (e.g., monoethanolamine), bis(hydroxyalkyl)amines having from 2 to 10 carbon atoms (e.g., bis(hydroxyethyl)amine), cyclic amines having from 2 to 10 carbon atoms (e.g., morpholine), and secondary amines such as alkyl(hydroxyalkyl)amines having from 2 to 10 carbon atoms (e.g., methylethanolamine and isopropylethanolamine).

The amine compound is preferably benzylamine, di-n-butylamine, ethylenediamine, or monoethanolamine.

-Charged Amount of Amine Compound-

When an amine compound is used as the active hydrogen compound, a charged mass ratio of the amine compound with respect to the thiourethane resin (i.e., charged mass ratio [amine compound/thiourethane resin]) can be adjusted as appropriate, and it is preferably 0.10 or higher but lower than 1.0.

When the charged mass ratio [amine compound/thiourethane resin] is 0.10 or higher, the generation of a polythiol composition is further facilitated.

When the charged mass ratio [amine compound/thiourethane resin] is lower than 1.0, the amine compound can be further prevented from remaining in a reaction mixture.

The charged mass ratio [amine compound/thiourethane resin] is preferably from 0.15 to 0.95, more preferably from 0.20 to 0.90.

When an amine compound is used as the active hydrogen compound, the number of charged millimoles of the amine compound with respect to 1 g of the thiourethane resin is preferably from 1.0 mmol/g to 30 mmol/g, more preferably from 2.0 mmol/g to 20 mmol/g, still more preferably from 3.0 mmol/g to 10.0 mmol/g.

When an amine compound is used as the active hydrogen compound, a charged equivalent of the amine compound with respect to the thiourethane resin (charged equivalent [amine compound/thiourethane resin]) is preferably from 1.0 to 2.0, more preferably more than 1.0 but 1.8 or less, still more preferably more than 1.0 but 1.6 or less.

When the charged equivalent [amine compound/thiourethane resin] is 1.0 or more, the generation of a polythiol composition is further facilitated.

When the charged equivalent [amine compound/thiourethane resin] is 2.0 or less, the amine compound can be further prevented from remaining in a reaction mixture.

It is noted here that the charged equivalent of the amine compound with respect to the thiourethane resin (charged equivalent [amine compound/thiourethane resin]) means a ratio of a total number of amino groups and monoalkylamino groups in the charged amine compound with respect to a total number of thiourethane bonds in the charged thiourethane resin.

-Alcohol Compound-

The alcohol compound which is another preferred active hydrogen compound may be a monoalcohol compound containing only one hydroxy group, or a polyol compound having two or more hydroxy groups.

From the standpoint of further improving the reactivity with the thiourethane resin, the molecular weight of the alcohol compound is preferably 1,000 or less, more preferably 500 or less, still more preferably 300 or less, yet still more preferably 200 or less.

A lower limit of the molecular weight of the alcohol compound is, for example, not less than 40, preferably not less than 50, more preferably not less than 60.

The alcohol compound preferably contains an alcohol compound having a boiling point of from 135°C to 250°C (hereinafter, also referred to as "alcohol compound A").

The term "boiling point" used herein means a boiling point under 1 atm (101,325 Pa).

A ratio of the alcohol compound A with respect to a total amount of the alcohol compound is preferably from 50% by mass to 100% by mass, more preferably from 60% by mass to 100% by mass, still more preferably from 80% by mass to 100% by mass.

The alcohol compound is preferably benzyl alcohol, phenethyl alcohol, 2-octanol, 2-ethyl-1-hexanol, 1-decanol, 1-nonanol, 1-octanol, 1-heptanol, 1-hexanol, 1-pentanol, propylene glycol, or ethylene glycol, more preferably benzyl alcohol, phenethyl alcohol, 1-decanol, 1-nonanol, 1-octanol, 1-heptanol, 1-hexanol, 1-pentanol, propylene glycol, or ethylene glycol, still more preferably benzyl alcohol, phenethyl alcohol, 2-octanol, 1-octanol, 1-heptanol, 1-hexanol, 1-pentanol, or propylene glycol.

In the case of using an alcohol compound as the active hydrogen compound, a preferred range of the charged amount of the alcohol compound is the same as the above-described preferred range of the charged amount of an amine compound in the case of using the amine compound as the active hydrogen compound.

In the case of using a combination of an amine compound and an alcohol compound as the active hydrogen compound, a preferred range of a total charged amount of the amine compound and the alcohol compound is the same as the above-described preferred range of the charged amount of an amine compound in the case of using the amine compound as the active hydrogen compound.

(Reaction Solvent)

In the reaction step, the composition X and the active hydrogen compound are preferably brought into contact with each other in the presence of a reaction solvent.
The reaction solvent is preferably an organic solvent, more preferably a hydrocarbon compound having from 5 to 12 (preferably from 6 to 10, more preferably from 7 to 9) carbon atoms.
The hydrocarbon compound is preferably hexane, heptane, octane, nonane, decane, xylene, mesitylene, or toluene, more preferably heptane, octane, nonane, xylene, mesitylene, or toluene, particularly preferably xylene or toluene.
The reaction solvent may be used singly, or in combination of two or more kinds thereof.

(Reaction Temperature)

A reaction temperature of the thiourethane resin and the active hydrogen compound in the reaction step can be adjusted as appropriate.
It is noted here that the "reaction temperature of the thiourethane resin and the active hydrogen compound" means a temperature at which the composition X and the active hydrogen compound are brought into contact with each other.
In the reaction step, the composition X and the active hydrogen compound are preferably brought into contact with each other under a temperature condition (i.e., reaction temperature) of from 50°C to 150°C (more preferably from 60°C to 145°C, still more preferably from 70°C to 140°C).
For example, when the reaction temperature is from 50°C to 150°C in an aspect of obtaining a polythiol composition as a target material, the purity of a polythiol component as a main component in the polythiol composition obtained as a target material (i.e., the content of the main component with respect to a total amount of the polythiol composition) can be further improved.

(Reaction Time)

A reaction time of the thiourethane resin and the active hydrogen compound in the reaction step (i.e., duration of contact between the composition X and the active hydrogen compound) can be adjusted as appropriate, and it is preferably from 0.1 hours to 20 hours, more preferably from 0.5 hours to 16 hours, still more preferably from 1 hour to 10 hours.

(Thiourethane Resin Raw Material as Target Material)

In the reaction step, the thiourethane resin and the active hydrogen compound are reacted with each other to generate a thiourethane resin raw material as a decomposition product of the thiourethane resin and as a target material.
The thiourethane resin raw material as a target material is a material (i.e., a compound or a composition; the same applies hereinafter) that is obtained as a decomposition product of the thiourethane resin, and it is also a material that can be utilized as a raw material for producing a new thiourethane resin.
The thiourethane resin raw material as a target material and the thiourethane resin raw material as a raw material of the thiourethane resin in the composition X used as a starting material are not required to be completely identical.
A preferred aspect of the thiourethane resin raw material as a target material of the production method of the disclosure will now be described.
The thiourethane resin raw material as a target material preferably contains at least one selected from the group consisting of a polythiol composition, a polyurea compound, a polycarbamate compound, a polyamine compound, a polyisocyanate compound, and a polyurethane compound.

-Polythiol Composition as Target Material and Polyisocyanate Compound as Target Material-

In the thiourethane resin raw material as a target material, the polythiol composition and the polyisocyanate compound are direct raw materials for the production of a thiourethane resin. In other words, a thiourethane resin can be generated by a reaction of the polythiol composition and the polyisocyanate compound.
With regard to the polythiol composition and the polyisocyanate compound, reference can be made as appropriate to known documents relating to thiourethane resins.

A preferred aspect of the polyisocyanate compound as a target material is the same as that of the above-described isocyanate compound as a raw material of the thiourethane resin.

A preferred aspect of the polythiol composition as a target material is the same as that of the above-described polythiol composition as a raw material of the thiourethane resin.

The polythiol composition as a target material and the polythiol composition as a raw material of the thiourethane resin in the composition X used as a starting material are not required to be completely identical.

However, from the standpoint of the performance of the thiourethane resin produced from the polythiol composition that is a target material, it is preferred that the type of a polythiol component contained as a main component in the polythiol composition as a target material is the same as the type of a polythiol component contained as a main component in the polythiol composition as a raw material. In this case, for example, by using a milling swarf (composition X) generated in the production of an optical material A as a raw material, an optical material B (optical material containing the composition X) having comparable performance to the optical material A can be produced.

-Polyamine Compound as Target Material-

The polyamine compound as a target material is a compound that can be utilized as a raw material of a polyisocyanate compound. Specifically, a polyamine compound can be generated by reacting the polyamine compound with phosgene (i.e., carbonyl dichloride).

The polyamine compound as a target material can be generated by, for example, reacting the below-described polyurea compound and an amine compound with each other (see the below-described Examples 201 to 211).

The polyamine compound as a target material can also be generated by, for example, reacting the below-described polycarbamate compound and an amine compound with each other.

-Polyurea Compound as Target Material-

The polyurea compound as a target material is a compound that can be utilized as a raw material of a polyamine compound. Specifically, a polyamine compound can be generated by reacting the polyurea compound with an amine compound.

The polyurea compound as a target material can be generated by, for example, reacting a thiourethane resin and an amine compound with each other and thereby decomposing the thiourethane resin. Specifically, by reacting a thiourethane resin and an amine compound with each other, the thiourethane resin can be decomposed into a polythiol composition and a polyurea compound (aminolysis).

With regard to examples of the aminolysis, reference can be made to the below-described Examples 1 to 13 (in which a polythiol composition was obtained) and Examples 201 to 211 (in which a polyurea compound was obtained). The below-described Examples 201 to 211 also show a step of obtaining a polyamine compound from a polyurea compound (second step).

-Polycarbamate Compound as Target Material-

The polycarbamate compound as a target material is a compound that can be utilized as a raw material of a polyamine compound. Specifically, a polyamine compound can be generated by reacting the polycarbamate compound with an amine compound.

The polycarbamate compound as a target material can be generated by, for example, reacting a thiourethane resin and an alcohol compound with each other and thereby decomposing the thiourethane resin. Specifically, by reacting a thiourethane resin and an alcohol compound with each other, the thiourethane resin can be decomposed into a polythiol composition and a polycarbamate compound (alcoholysis).

The use of the thiourethane resin raw material that is a target material is not particularly limited.

One example of specific use of the thiourethane resin raw material that is a target material is the use for the production of an optical material (e.g., a lens, preferably an eyeglass lens).

In other words, one specific example of the method of producing a thiourethane resin raw material according to the disclosure is a method of producing a thiourethane resin raw material for the production of an optical material. In this specific example, when a milling swarf that contains the composition X containing a thiourethane resin and a foreign material, which is generated in the production of an optical material, is used as a starting material, effective utilization (i.e., recycle) of materials (the thiourethane resin and a thiourethane resin raw material that is a raw material of the thiourethane resin) is realized effectively.

In addition, in the reaction step, when a polythiol composition is obtained by a reaction between the thiourethane resin and the active hydrogen compound, a polythiol composition having a higher purity of a polythiol component as a main component can be obtained as compared to a known method (e.g., a method of obtaining a polythiol composition by a reaction between a thiourethane resin and sodium hydroxide).

Therefore, also when the polythiol composition obtained as a target material is used for the production of an optical material (e.g., a lens), an optical material having favorable performance can be obtained.

Examples of the performance of the optical material include optical properties (e.g., refractive index and/or Abbe number), heat resistance, and specific gravity d.

(Reaction Mixture Containing Thiourethane Resin Raw Material)

The reaction step may also be a step of obtaining a reaction mixture containing the thiourethane resin raw material as a target material by reacting the composition X and the active hydrogen compound with each other in the presence of a reaction solvent (preferably an organic solvent, more preferably a hydrocarbon compound having from 5 to 12 carbon atoms), and thereby reacting the thiourethane resin in the composition X, and the active hydrogen compound, with each other.

The reaction mixture may also contain a thiourethane resin raw material that is a main product generated by decomposition, and components other than this thiourethane resin raw material.

Examples of such other components include by-products generated by decomposition, a reaction solvent, a residue of a raw material, and impurities contained in a raw material.

<Separation Step>

The method of producing a thiourethane resin raw material according to the disclosure may also include the separation step of separating the thiourethane resin raw material as a target material from the above-described reaction mixture containing the thiourethane resin raw material.

A separation method in the separation step is not particularly limited, and any known method can be applied.

Examples of the separation method in the separation step include filtration, decantation, extraction, distillation, drying (including vacuum drying), and purification (e.g., column chromatography). These separation methods may be used in combination of two or more thereof.

When the thiourethane resin raw material contains a polythiol composition, the separation step preferably includes obtaining a filtrate containing the polythiol composition by filtration of the reaction mixture containing the thiourethane resin raw material obtained in the reaction step.

According to this aspect, solids (e.g., a solid containing a by-product) contained in the reaction mixture can be removed more easily.

It is noted here that the solids contain, for example, a polyurea compound and/or a polycarbamate compound. As described above, the polyurea compound and the polycarbamate compound can each be utilized as a thiourethane resin raw material.

One example of a preferred aspect of a case where the separation step includes obtaining a filtrate containing the polythiol composition is an aspect (hereinafter, referred to as "separation aspect A") in which the separation step includes:

filtering the reaction mixture containing the thiourethane resin raw material to obtain a filtrate containing the polythiol composition;
acid washing the filtrate containing the polythiol composition; and
separating the polythiol composition from the thus acid-washed filtrate.

According to this separation aspect A, since alkali components (e.g., a residue of the active hydrogen compound) are easily removed from the filtrate by the acid washing, a polythiol composition having a higher purity of a polythiol component as a main component can be obtained.

In the separation aspect A, water washing may be additionally performed after the acid washing, and the polythiol composition may be separated from the thus water-washed filtrate.

In the separation aspect A, examples of an acid used in the acid washing include hydrochloric acid, carbonic acid, nitric acid, sulfuric acid, acetic acid, formic acid, and oxalic acid.

Another example of a preferred aspect of a case where the separation step includes obtaining a filtrate containing the polythiol composition is an aspect (hereinafter, referred to as "separation aspect B") in which the separation step includes:

filtering the reaction mixture containing the thiourethane resin raw material to obtain a filtrate containing the polythiol composition;

adding an alkali metal-containing base and then water to the filtrate containing the polythiol composition to perform extraction and thereby obtain a water extract containing an alkali metal salt of the polythiol composition;

adding an acid to the water extract containing an alkali metal salt of the polythiol composition to obtain an aqueous liquid containing the polythiol composition;

adding an extraction solvent (preferably an organic solvent, more preferably a hydrocarbon compound having from 5 to 12 carbon atoms) to the aqueous liquid containing the polythiol composition to perform extraction and thereby obtain an extract containing the polythiol composition; and

separating the polythiol composition from the extract containing the polythiol composition.

In the separation aspect B, first, the polythiol composition in the filtrate containing the polythiol composition is converted to an alkali metal salt and subsequently extracted with water to obtain a water extract containing the alkali metal salt of the polythiol composition. Next, an acid is added to this water extract to convert the alkali metal salt of the polythiol composition back to the polythiol composition. From the resulting aqueous liquid containing the polythiol composition, the polythiol composition is extracted with a reaction solvent to obtain an extract containing the polythiol composition. The polythiol composition is then separated from the thus obtained extract containing the polythiol composition.

According to this separation aspect B, even when the filtrate containing the polythiol composition contains a large amount of components other than the polythiol composition, a polythiol composition having a higher purity of a polythiol component as a main component can be obtained.

Particularly, even when the filtrate containing the polythiol composition contains a foreign material, incorporation of the foreign material into the eventually obtained polythiol composition can be inhibited.

In the separation aspect B, the alkali metal in the alkali metal-containing base is preferably sodium, potassium, or lithium, more preferably sodium or potassium.

Examples of the alkali metal-containing base include sodium methoxide, sodium ethoxide, sodium propoxide, sodium hydroxide, potassium hydroxide, and lithium hydroxide.

If necessary, the alkali metal-containing base can be added to the filtrate in the form of an alcohol solution (e.g., a methanol solution or an ethanol solution).

In the separation aspect B, examples of the acid added to the water extract containing an alkali metal salt of the polythiol composition include hydrochloric acid, carbonic acid, nitric acid, sulfuric acid, acetic acid, formic acid, and oxalic acid.

In the separation aspect B, the hydrocarbon compound as the extraction solvent may be used singly, or in combination of two or more kinds thereof.

In the separation aspect B, a preferred aspect of the hydrocarbon compound used as the extraction solvent is the same as that of the hydrocarbon compound used as the above-described reaction solvent.

It is noted here, however, that the reaction solvent and the extraction solvent may be the same or different.

In the separation aspect B, for the separation of the polythiol composition from the extract containing the polythiol composition, it is particularly preferred to filtrate the extract first and then separate the polythiol composition from the thus filtered extract. By this, components (e.g., oligomer components such as a defective decomposition and an oxidant) that are insoluble to the extraction solvent can be removed from the extract; therefore, a polythiol composition having a higher purity of a polythiol component as a main component can be obtained.

<Sieving Step>

The method of producing a thiourethane resin raw material according to the disclosure may further include, prior to the reaction step, the sieving step of applying a milling swarf of the swarf-form composition X containing the thiourethane resin and the foreign material to a sieve to obtain the swarf-form composition X containing the thiourethane resin and the foreign material, which has passed through the sieve. In this case, in the reaction step, by contacting the swarf-form composition X and the active hydrogen compound with each other, the thiourethane resin in the swarf-form composition X that has passed through the sieve and the amine compound react with each other.

When the method of producing a polythiol composition according to the disclosure includes this sieving step, since the swarf-form composition X that consists of particles having a small particle size and has passed through the sieve is brought into contact with the active hydrogen compound in the reaction step, the efficiency of the reaction between the thiourethane resin and the active hydrogen compound can be further improved.

The above-described sieve is not particularly limited.

The nominal mesh size of the sieve, which is defined by JIS Z-8801-1:2019, is, for example, from 0.1 mm to 2 mm, preferably from 0.3 mm to 2 mm, more preferably from 0.5 mm to 1.5 mm.

<Washing Step>

The method of producing a thiourethane resin raw material according to the disclosure may further include, prior to the reaction step, the washing step of washing the swarf-form composition X (i.e., swarf containing the thiourethane resin and the foreign material) using a washing solvent (preferably an organic solvent, more preferably a hydrocarbon compound having from 5 to 12 carbon atoms). In this case, in the reaction step, the thiourethane resin in the swarf-form composition X washed in the washing step and the active hydrogen compound react with each other. As a result, a polythiol composition having a higher purity of a polythiol component as a main component can be obtained.

Particularly, in the method of producing a polythiol composition according to the disclosure, when a milling swarf of the swarf-form composition X containing the thiourethane resin and the foreign material is used as a starting material, an oil adhering to the milling swarf, which is originated from a milling machine, can be effectively removed by the washing step; therefore, a polythiol composition having a higher purity of a polythiol component as a main component can be obtained.

The organic solvent as the washing solvent may be used singly, or in combination of two or more kinds thereof.

A preferred aspect of the organic solvent used as the washing solvent is the same as that of the organic solvent used as the above-described reaction solvent.

It is noted here, however, that the reaction solvent and the washing solvent may be the same or different.

A washing method in the washing step is not particularly limited, and any known method, such as a method of adding the above-described washing solvent to the swarf-form composition X and mixing the resultant, can be applied.

When the method of producing a thiourethane resin raw material according to the disclosure includes the above-described sieving step and washing step, the sieving step and the washing step are preferably performed in this order. In this case, since it is not necessary to wash the milling swarf not passing through the sieve, the amount of the washing solvent to be used can be further reduced.

Further, when the swarf-form composition X (i.e., swarf containing the thiourethane resin and the foreign material) contains water, the drying step may be incorporated prior to the reaction step for the purpose of removing this water.

<Embodiment A>

An embodiment A, which is one of preferred embodiments of the method of producing a thiourethane resin raw material according to the disclosure, will now be described.

The embodiment A is an embodiment in which, in the method of producing a thiourethane resin raw material according to the disclosure, the foreign material, the active hydrogen compound, and the thiourethane resin raw material are limited to a combination of an UV absorber, an amine compound, and a polythiol composition, respectively.

Except that the foreign material, the active hydrogen compound, and the thiourethane resin raw material are limited to a combination of an UV absorber, an amine compound, and a polythiol composition, respectively, the embodiment A is the same as the method of producing a thiourethane resin raw material according to the disclosure, and preferred aspects thereof are also the same.

The method of producing a thiourethane resin raw material according to the embodiment A may be paraphrased as "the method of producing a polythiol composition according to the embodiment A".

According to the method of producing a thiourethane resin raw material (i.e., method of producing a polythiol composition) according to the embodiment A, a polythiol composition can be produced by using, as a starting material, a composition XA containing a thiourethane resin and a UV absorber.

Specifically, the reaction step according to the embodiment A is a step of generating a polythiol composition by contacting a composition X, which contains a thiourethane resin and a UV absorber, and an amine compound with each other, and thereby reacting the thiourethane resin in the composition XA and the amine compound with each other.

In the reaction step according to the embodiment A, aminolysis, which is a reaction in which the thiourethane resin is decomposed by the amine compound, occurs, and a polythiol composition that is a target material is generated as a result of this aminolysis.

Preferred aspects of the amine compound and the polythiol composition in the embodiment A are as described above.

In the embodiment A, the composition XA contains at least one UV absorber.

Examples of the UV absorber include:

benzophenone-based UV absorbers, such as 2,2'-dihydroxy-4-methoxybenzophenone, 2-hydroxy-4-acryloyloxybenzophenone, 2-hydroxy-4-acryloyloxy-5-*tert*-butylbenzophenone, and 2-hydroxy-4-acryloyloxy-2',4'-dichlorobenzophenone;
triazine-based UV absorbers, such as 2-[4-[(2-hydroxy-3-dodecyloxypropyl)oxy]-2-hydroxyphenyl]-4,6-bis(2,4-dimethylphenyl)-1,3,5-triazine, 2-[4-(2-hydroxy-3-tridecyloxypropyl)oxy]-2-hydroxyphenyl]-4,6-bis(2,4-dimethylphenyl)-1,3,5-triazine, 2-[4-[(2-hydroxy-3-(2'-ethyl)hexyl]oxy]-2-hydroxyphenyl]-4,6-bis(2,4-dimethylphenyl)-1,3,5-triazine, 2,4-bis(2-hydroxy-4-butyloxyphenyl)-6-(2,4-bis-butyloxyphenyl)-1,3,5-triazine, and 2-(2-hydroxy-4-[1-octyloxycarbonylethoxy]phenyl)-4,6-bis(4-phenylphenyl)-1,3,5-triazine; and

benzotriazole-based UV absorbers, such as 2-(2H-benzotriazol-2-yl)-4-methylphenol, 2-(2H-benzotriazol-2-yl)-4-*tert*-octylphenol, 2-(2H-benzotriazol-2-yl)-4,6-bis(1-methyl-1-phenylethyl)phenol, 2-(2H-benzotriazol-2-yl)-4,6-di-*tert*-pentylphenol, 2-(5-chloro-2H-benzotriazol-2-yl)-4-methyl-6-*tert*-butylphenol, 2-(5-chloro-2H-benzotriazol-2-yl)-2,4-*tert*butylphenol, and 2,2'-methylenebis[6-(2H-benzotriazol-2-yl)-4-(1,1,3,3-tetramethylbutyl)phenol].

The UV absorber preferably contains a benzotriazole-based UV absorber. In this case, the content of the benzotriazole-based UV absorber with respect to a total amount of the UV absorber is preferably from 50% by mass to 100% by mass, more preferably from 60% by mass to 100% by mass, still more preferably from 80% by mass to 100% by mass.

The content of the UV absorber in the composition XA is preferably from 0.001% by mass to 10% by mass, more preferably from 0.01% by mass to 5% by mass, still more preferably from 0.01% by mass to 3% by mass, with respect to a total amount of the thiourethane resin in the composition XA.

A total content of the thiourethane resin and the UV absorber in the composition XA is preferably from 80% by mass to 100% by mass, more preferably from 90% by mass to 100% by mass, with respect to a total amount of the composition XA.

The polythiol composition as a target material in the embodiment A may also contain, as an impurity, a component other than the polythiol compound.

For example, in the resulting polythiol composition, a UV absorber derived from a raw material may be incorporated (i.e., contained).

However, when the polythiol composition is produced as a raw material of a thiourethane resin for an optical member (e.g., a lens), from the standpoint of the optical properties of the optical member (e.g., hue of the lens), the content of the UV absorber in the resulting polythiol composition is preferably 4% by mass or less, more preferably 1% by mass or less, still more preferably less than 0.1% by mass, yet still more preferably 0.05% by mass or less, with respect to a total amount of the polythiol composition.

As the raw material of a thiourethane resin for an optical member (e.g., a lens), it is also possible to use a blend of the polythiol composition obtained as a target material in the embodiment A (e.g., a polythiol composition containing a large amount of a UV absorber) and a polythiol composition (e.g., a polythiol composition containing substantially no UV absorber) produced by the method described in a known document (e.g., JP-A No. S63-46213, JP-A No. H2-270859, JP-A No. H7-252207, JP-A No. S60-199016, JP-A No. S60-217229, WO 2007/052329, or WO 2008/047626).

[Method of Producing Polymerizable Composition]

The method of producing a polymerizable composition according to the disclosure includes:

a step of producing a thiourethane resin raw material by the above-described method of producing a thiourethane resin raw material according to the disclosure; and

a step of obtaining a polymerizable composition by using at least a portion of the thiourethane resin raw material as at least a portion of a raw material.

The method of producing a polymerizable composition according to the disclosure, if necessary, may also include other steps.

In the method of producing a polymerizable composition according to the disclosure:

in the step of producing a thiourethane resin raw material, a thiourethane resin raw material is produced using a composition X containing a thiourethane resin and a foreign material (e.g., a thiourethane resin and a foreign material that are contained in a ground swarf of a formed body containing the thiourethane resin and the foreign material) as a starting material; and

in the step of obtaining a polymerizable composition, a polymerizable composition is produced using at least a portion of the thus produced thiourethane resin raw material as at least a portion of a raw material.

The thus obtained polymerizable composition can be used again for the production of a thiourethane resin.

In this manner, in the method of producing a polymerizable composition according to the disclosure, effective utilization (i.e., recycle) of materials (i.e., a thiourethane resin and its raw materials) is realized.

In addition, as described above, the method of producing a thiourethane resin raw material according to the disclosure can yield a polythiol composition having a higher purity of a polythiol component as a main component as compared to a known method (e.g., a method of obtaining a polythiol composition by a reaction between a thiourethane resin and sodium hydroxide).

In the method of producing a polymerizable composition according to the disclosure, such a polythiol composition is used; therefore, according to the polymerizable composition obtained by the method of producing a polymerizable composition according to the disclosure, a resin that is excellent in various performance [for example, optical properties (e.g., refractive index and/or Abbe number), heat resistance, and specific gravity d] can be produced.

Hence, the polymerizable composition obtained by the method of producing a polymerizable composition according to the disclosure is particularly suitable as a composition for the production of a thiourethane resin for an optical material.

In addition, as described above, the method of producing a thiourethane resin raw material according to the disclosure can yield a polythiol composition having a higher purity of a polythiol component as a main component as compared to a known method (e.g., a method of obtaining a polythiol composition by a reaction between a thiourethane resin and sodium hydroxide).

In the method of producing a polymerizable composition according to the disclosure, such a polythiol composition is used; therefore, according to the polymerizable composition obtained by the method of producing a polymerizable composition according to the disclosure, a resin that is excellent in various performance [for example, optical properties (e.g., refractive index and/or Abbe number), heat resistance, and specific gravity d] can be produced.

Hence, the polymerizable composition obtained by the method of producing a polymerizable composition according to the disclosure is particularly suitable as a composition for the production of a thiourethane resin for an optical material.

<Step of Producing Thiourethane Resin Raw Material>

With regard to the step of producing a thiourethane resin raw material, reference can be made as appropriate to the above-described method of producing a thiourethane resin raw material according to the disclosure.

<Step of Obtaining Polymerizable Composition>

In the step of obtaining a polymerizable composition, a polymerizable composition is obtained using, as at least a portion of a raw material, at least a portion of the thiourethane resin raw material obtained in the step of producing a thiourethane resin raw material.

In the step of obtaining a polymerizable composition, at least a portion of the thiourethane resin raw material obtained in the step of producing a thiourethane resin raw material is used and, if necessary, other components may also be mixed with the at least a portion of the thiourethane resin raw material.

Examples of such other components include a thiourethane resin raw material (e.g., new thiourethane resin raw material) other than the thiourethane resin raw material obtained in the step of producing a thiourethane resin raw material (i.e., recycled thiourethane resin raw material).

The polymerizable composition preferably contains a polythiol composition and a polyisocyanate compound as monomers.

In this case, the polythiol composition preferably contains a recycled polythiol composition.

Examples of the above-described other components also include a polymerization catalyst, an internal mold release agent, a resin modifier, a chain extender, a crosslinking agent, a radical scavenger, a light stabilizer, a UV absorber, an antioxidant, an oil-soluble dye, a filler, an adhesion improver, an antimicrobial agent, an antistatic agent, a dye, a fluorescent brightener, a fluorescent pigment, and an inorganic pigment.

Examples of the polymerization catalyst include tertiary amine compounds, inorganic and organic acid salts thereof, metal compounds, quaternary ammonium salts, and organic sulfonic acids.

As the internal mold release agent, an acidic phosphoric acid ester can be used. Examples of the acidic phosphoric acid ester include phosphoric acid monoesters and phosphoric acid diesters, and these may be used singly, or in combination of two or more kinds thereof.

Examples of the resin modifier include episulfide compounds, alcohol compounds, amine compounds, epoxy compounds, organic acids, organic acid anhydrides, and olefin compounds containing a (meth)acrylate compound or the like. The term "(meth)acrylate compound" used herein means at least one of an acrylate compound or a methacrylate compound.

Examples of the UV absorber include triazine-based UV absorbers and benzotriazole-based UV absorbers.

<When Embodiment A is Applied>

In the method of producing a polymerizable composition according to the disclosure, the above-described embodiment A may be applied to the step of producing a thiourethane resin raw material.

In other words, the step of producing a thiourethane resin raw material may be a step of producing a polythiol composition by the method of producing a polythiol composition according to the above-described embodiment A.

When the embodiment A is applied, in the step of obtaining a polymerizable composition, a polymerizable composition that contains a polythiol composition produced by the method of producing a polythiol composition according to the above-described embodiment A and a polyisocyanate compound may be produced. A preferred aspect of this polyisocyanate compound is the same as that of the "isocyanate compound as a raw material of the thiourethane resin" described in the section of "Method of Producing Thiourethane Resin Raw Material".

When the embodiment A is applied, a mixing ratio of the polythiol composition and the polyisocyanate compound is not particularly limited. A molar ratio between the mercapto groups of the polythiol compound contained in the polythiol composition and the isocyanate groups of the polyisocyanate compound (mercapto groups/isocyanate groups) is preferably from 0.5 to 3.0, more preferably from 0.6 to 2.0, still more preferably from 0.8 to 1.3. When the mixing ratio is in the above-described range, various performance required for a plastic lens or the like, such as refractive index and heat resistance, tend to be satisfied in a well-balanced manner.

When the embodiment A is applied, a total charged mass of the polythiol composition and the polyisocyanate compound is not particularly limited; however, it is preferably not less than 60% by mass, more preferably not less than 80% by mass, still more preferably not less than 90% by mass, with respect to a total amount of the polymerizable composition to be produced.

When the embodiment A is applied, in the step of obtaining a polymerizable composition, at least the above-described polythiol composition and polyisocyanate compound are mixed and, if necessary, other components may also be mixed along with the polythiol composition and the polyisocyanate compound.

Further, in the step of obtaining a polymerizable composition, after mixing at least the polythiol composition and the polyisocyanate compound, other components may be added to the resulting mixture.

Examples of these other components include a polymerization catalyst, an internal mold release agent, a resin modifier, a chain extender, a crosslinking agent, a radical scavenger, a light stabilizer, a UV absorber, an antioxidant, an oil-soluble dye, a filler, an adhesion improver, an antimicrobial agent, an antistatic agent, a dye, a fluorescent brightener, a fluorescent pigment, and an inorganic pigment.

[Method of Producing Resin]

The method of producing a resin according to the disclosure includes:

a step of producing a polymerizable composition by the above-described method of producing a polymerizable composition according to the disclosure; and
a step of obtaining a resin by curing the polymerizable composition.

The method of producing a resin according to the disclosure, if necessary, may also include other steps.

According to the method of producing a resin according to the disclosure, the same effects as those of the above-described method of producing a polymerizable composition according to the disclosure are exerted.

The resin produced by the method of producing a resin according to the disclosure and the below-described resin according to the disclosure are both thiourethane resins, and they are each hereinafter simply referred to as "resin" so as to distinguish them from a thiourethane resin that is a starting material of a thiourethane resin raw material.

In the step of obtaining a resin, a resin is obtained by curing the above-described polymerizable composition.

The polymerizable composition can be cured by polymerizing the monomers contained in the polymerizable composition (e.g., the polythiol composition and the polyisocyanate compound; the same applies hereinafter). As a pretreatment of this polymerization, the polymerizable composition may be subjected to filtration, degassing, and the like.

The conditions for the polymerization of the monomers contained in the polymerizable composition (e.g., polymerization temperature and polymerization time) are set as appropriate, taking into consideration the formulation of the composition, the types and the amounts of the monomers used in the composition, the type and the amount of a polymerization catalyst used in the composition, and the properties of the below-described mold if used, and the like.

The polymerization temperature is, for example, from -50°C to 150°C, or from 10°C to 150°C.

The polymerization time is, for example, from 1 hour to 200 hours, or from 1 hour to 80 hours.

In the step of obtaining a resin, a resin may be obtained by performing a treatment such as annealing on a polymer obtained by the polymerization of the monomers.

The temperature of this annealing is preferably from 50°C to 150°C, more preferably from 90°C to 140°C, still more preferably from 100°C to 130°C.

[Method of Producing Formed body]

The method of producing a formed body according to the disclosure is a method of producing a resin-containing formed body, and includes:

a step of producing a polymerizable composition by the above-described method of producing a polymerizable composition according to the disclosure; and
a step of obtaining a resin-containing formed body by curing the polymerizable composition.

The method of producing a formed body according to the disclosure, if necessary, may also include other steps.
According to the method of producing a formed body according to the disclosure, the same effects as those of the above-described method of producing a polymerizable composition according to the disclosure are exerted.
In the step of obtaining a resin-containing formed body, a resin-containing formed body is obtained by curing the above-described polymerizable composition.
With regard to preferred conditions for the curing of the polymerizable composition, i.e., the polymerization of the monomers contained in the polymerizable composition, reference can be made as appropriate to the above section of "Method of Producing Resin".
One example of the polymerization in this step is cast polymerization.
In the cast polymerization, first, the above-described polymerizable composition is injected between casting molds held by a gasket, a tape, or the like. In this process, if necessary, a defoaming treatment, a filtration treatment, and the like may be performed.
Next, the monomers contained in the polymerizable composition injected between the casting molds are polymerized to cure the composition between the casting molds and thereby obtain a cured product. Subsequently, the cured product is removed from the casting molds to obtain a resin-containing formed body.
The polymerization of the monomers may also be performed by heating the polymerizable composition. This heating can be performed using, for example, a heating apparatus equipped with a mechanism for heating a material to be heated in an oven, water, or the like.

[Method of Producing Optical Material and Method of Producing Lens]

The method of producing an optical material (e.g., a lens) according to the disclosure is a method of producing an optical material (e.g., a lens) containing a resin-containing formed body, and includes:

a step of producing a polymerizable composition by the above-described method of producing a polymerizable composition according to the disclosure; and
a step of obtaining a resin-containing formed body by curing the polymerizable composition.

The method of producing an optical material (e.g., a lens; the same applies hereinafter) according to the disclosure, if necessary, may also include other steps.
According to the method of producing an optical material according to the disclosure, the same effects as those of the above-described method of producing a polymerizable composition according to the disclosure are exerted.
The method of producing an optical material according to the disclosure is an application of the method of producing a formed body according to the disclosure.
For example, by appropriately selecting the shape of the casting molds used in the above-described cast polymerization in the method of producing a formed body according to the disclosure, a formed body that is applicable to an optical material (e.g., a lens) can be obtained.
Examples of the optical material include lenses (e.g., eyeglass lenses, camera lenses, and polarizing lenses), and light-emitting diodes (LEDs).
The method of producing an optical material (e.g., a lens) according to the disclosure may also include a step of forming a coating layer on one side or both sides of a resin-containing formed body.
Specific examples of the coating layer include a primer layer, a hard coat layer, an anti-reflection layer, an anti-fog coating layer, an anti-fouling layer, and a water-repellent layer.
These coating layers may each be formed singly, or plural coating layers may be formed in the form of a multilayer structure. When coating layers are formed on both sides, the same coating layer may be formed on the respective sides, or different coating layers may be formed on the respective sides.
Components of the coating layer can be selected as appropriate in accordance with the intended purpose.
Examples of the components of the coating layer include a resin (e.g., a urethane resin, an epoxy resin, a polyester resin, a melamine resin, or a polyvinyl acetal resin), an infrared absorber, a light stabilizer, an antioxidant, a photochromic compound, a dye, a pigment, and an antistatic agent.

With regard to the eyeglass lens and the coating layer, reference can be made as appropriate to the descriptions of known documents, such as JP-A No. 2002-194083 and WO 2017/047745.

[Polymerizable Composition]

The polymerizable composition of the disclosure contains at least a portion of the thiourethane resin raw material obtained by the above-described method of producing a thiourethane resin raw material according to the disclosure.

The polymerizable composition of the disclosure can be produced by the above-described method of producing a polymerizable composition according to the disclosure.

According to the polymerizable composition of the disclosure, the same effects as those of the above-described method of producing a polymerizable composition according to the disclosure are exerted.

With regard to a preferred aspect of the polymerizable composition of the disclosure, reference can be made as appropriate to the above-described method of producing a polymerizable composition according to the disclosure.

[Resin, Formed Body, and Optical Material (e.g., Lens)]

The resin of the disclosure is a cured product of the above-described polymerizable composition of the disclosure.

The formed body of the disclosure is a formed body containing the above-described resin of the disclosure.

The optical material (e.g., a lens) of the disclosure is an optical material (e.g., a lens) containing the above-described resin of the disclosure.

According to the resin of the disclosure, the formed body of the disclosure, and the optical material (e.g., a lens) of the disclosure, the same effects as those of the above-described method of producing a polymerizable composition according to the disclosure are exerted.

The resin of the disclosure, the formed body of the disclosure, and the optical material (e.g., a lens) of the disclosure can be produced by the above-described method of producing a resin according to the disclosure, the above-described method of producing a formed body according to the disclosure, and the above-described method of producing an optical material (e.g., a lens) according to the disclosure, respectively.

With regard to preferred aspects of the resin of the disclosure, the formed body of the disclosure, and the optical material (e.g., a lens) of the disclosure, reference can be made to the above-described preferred aspects of the method of producing a resin according to the disclosure, the method of producing a formed body according to the disclosure, and the method of producing an optical material (e.g., a lens) according to the disclosure, respectively.

<Preferred Performance of Resin or Formed Body>

From the standpoint of heat resistance, the resin (or formed body) of the disclosure has a glass transition temperature Tg of preferably 80°C or higher, more preferably 85°C or higher.

The glass transition temperature Tg may be 105°C or lower, or 100°C or lower.

From the standpoint of application to an optical material, the resin (or formed body) of the disclosure has a refractive index (nd) of preferably 1.550 or higher, more preferably 1.600 or higher, still more preferably 1.650 or higher.

An upper limit of the refractive index (nd) is not particularly limited, and it is, for example, 1.700.

From the standpoint of application to an optical material, the resin (or formed body) of the disclosure has an Abbe number of preferably 28 or greater, more preferably 30 or greater.

An upper limit of the Abbe number is not particularly limited, and it is, for example, 40, preferably 35.

From the standpoint of application to an optical material, the resin (or formed body) of the disclosure has a specific gravity d of preferably 1.00 or higher.

An upper limit of the specific gravity d is not particularly limited, and it is, for example, 1.50, preferably 1.40.

EXAMPLES

Examples of the disclosure will now be described; however, the disclosure is not limited to the below-described Examples.

Hereinafter, unless otherwise specified, "%" means % by mass, and "room temperature" means 25°C.

Hereinafter, the purity (% by mass) of a polythiol component T2 in a polythiol composition means the content (% by mass) of the polythiol component T2 with respect to a total amount of the polythiol composition, more specifically the content (% by mass) of the polythiol component T2 with respect to a total amount of the polythiol composition, which content is determined by high-performance liquid chromatography under the following conditions using an internal standard substance.

(Conditions of High-Performance Liquid Chromatography)

Column: YMC-Pack ODS-A (particle size S: 5 μm, pore diameter: 12 nm, column shape: Φ6 mm × 150 mm)
Mobile phase: acetonitrile/0.01 mol-aqueous potassium dihydrogen phosphate solution = 60/40 (vol/vol)
Column temperature: 40°C
Flow rate: 1.0 ml/min
Detector: UV detector, wavelength: 230 nm
Preparation of measurement solution: 160 mg of a sample is dissolved and mixed with 10 ml of acetonitrile.
Injection amount: 2 μL

[Reference Production Example 1]

(Production of Formed Body 1 Containing Thiourethane Resin)

In a flask equipped with a stirrer,

dimethyl tin dichloride (trade name: NESTIN P, manufactured by The Honjo Chemical Corporation) (100 ppm by mass with respect to a total amount of the below-described polyisocyanate compound and the below-described polythiol composition) as a polymerization catalyst,
ZELEC-UN (manufactured by Stepan Company; acidic phosphoric acid ester) (1,000 ppm by mass with respect to a total amount of the below-described polyisocyanate compound and the below-described polythiol composition) as a mold release agent,
*m*-xylylene diisocyanate (XDI) (50.8 parts by mass) as a polyisocyanate compound, and
a polythiol composition (hereinafter, referred to as "polythiol composition TA") (49.2 parts by mass) containing a combination of 4,8-dimercaptomethyl-1,11-dimercapto-3,6,9-trithiaundecane, 4,7-dimercaptomethyl-1,11-dimercapto-3,6,9-trithiaundecane, and 5,7-dimercaptomethyl-1,11-dimercapto-3,6,9-trithiaundecane (i.e., polythiol component T2) as a main component
were added and mixed with stirring for 1 hour at room temperature to obtain a polymerizable composition in the form of a transparent homogeneous solution.

It is noted here that the purity of the polythiol component T2 in the polythiol composition TA (i.e., the content of the polythiol component T2 with respect to a total amount of the polythiol composition TA) was 85.5%.
Next, the thus obtained polymerizable composition was vacuum-filtered through a polytetrafluoroethylene (PTFE) filter, and then thoroughly degassed under a reduced pressure of 600 Pa until foaming was no longer observed. The thus degassed polymerizable composition was injected between a pair of glass molds immobilized by a tape, and then, this pair of glass molds was placed in an oven, after which the oven internal temperature was set at 25°C. Subsequently, the oven internal temperature was raised from 25°C to 120°C over a period of 24 hours. By this process, monomers (the polyisocyanate compound and the polythiol composition TA) contained in the degassed polymerizable composition were polymerized to form a formed body containing a thiourethane resin R1 (i.e., a cured product of the polymerizable composition) between the pair of glass molds.
Thereafter, the inside of the oven was cooled, and the pair of glass molds was subsequently taken out of the oven, after which the formed body was obtained by removing it from the pair of glass molds.

(Production of Thiourethane Resin Swarf R1)

A lens was produced by milling the thus obtained formed body. A milling swarf generated in this process was collected and applied to a sieve having a nominal mesh size of 2 mm as defined by JIS Z-8801-1:2019, whereby a thiourethane resin swarf R1 passed through the sieve (i.e., swarf containing the thiourethane resin R1) was obtained.

[Example 1]

-Reaction Step-

The thiourethane resin swarf R1 (40 g) obtained in Reference Production Example 1 and a milling swarf (4 g) of commercially available CR-39 resin (ADC (allyl diglycol carbonate) resin) as a foreign material were charged into a 300-mL flask equipped with a condenser to obtain a composition X1.

To this composition X1, monoethanolamine (manufactured by FUJIFILM Wako Pure Chemical Corporation) (15.8 g; 0.26 mol) and toluene (144 g) were added, and the resultant was heated with stirring at 100°C for 5 hours to obtain a reaction mixture containing a polythiol composition (hereinafter, referred to as "polythiol composition TB") as a thiourethane resin raw material (the above operations are hereinafter referred to as "reaction step").

-Separation Step (Separation Aspect B)-

The reaction mixture obtained in the reaction step was subjected to the separation step according to the above-described separation aspect B including extraction and the like, whereby the polythiol composition was separated from the reaction mixture. The details of this process will now be described.

The reaction mixture obtained in the reaction step was cooled to room temperature, and solid was subsequently removed by filtration to obtain a filtrate containing the polythiol composition.

To the thus obtained filtrate, 20 g of 35% hydrochloric acid was charged, followed by stirring and liquid separation. The resulting organic layer was washed twice with 100 mL of water. To the thus washed organic layer, 22.0 g of a 28% sodium methoxide methanol solution was added, followed by stirring. To this resultant, 100 g of water was added to extract soluble components to obtain a water extract.

The thus obtained water extract was washed twice with 50 g of toluene, followed by addition of 30 g of 35% hydrochloric acid and stirring, whereby an aqueous liquid was obtained.

Soluble components were extracted from the thus obtained aqueous liquid with 100 ml of toluene to obtain a toluene extract.

This toluene extract was washed twice with 100 g of water to obtain a toluene solution of the polythiol composition.

From the thus obtained toluene solution, toluene was distilled away using a rotary evaporator. The resulting mixture was sequentially subjected to removal of a low-boiling-point component by a vacuum pump and filtration through a 3-micron PTFE membrane filter in this order, whereby 11.4 g of a polythiol composition containing a combination of 4,8-dimercaptomethyl-1,11-dimercapto-3,6,9-trithiaundecane, 4,7-dimercaptomethyl-1,11-dimercapto-3,6,9-trithiaundecane, and 5,7-dimercaptomethyl-1,11-dimercapto-3,6,9-trithiaundecane (i.e., polythiol component T2) as a main component was obtained (the above operations are hereinafter referred to as "separation step").

The results of analyzing the SH value in the thus obtained polythiol composition and the purity of the polythiol component T2 based on high-performance liquid chromatography were as shown in Table 1 below.

[Examples 2 to 11]

The same operations as in Example 1 were performed, except that the type and the added amount of the foreign material in the composition X1 prepared in the reaction step were changed as shown in Table 1 or 2.

The results of analyzing the SH value in the thus obtained polythiol compositions and the purity of the polythiol component T2 based on high-performance liquid chromatography were as shown in Table 1 or 2 below.

In Tables 1 and 2, the details of the types of foreign materials are as follows.

- CR-39: a milling swarf of an ADC (allyl diglycol carbonate) resin
- polyurethane resin: a milling swarf of a polyurethane resin formed body
- acrylic resin: a milling swarf of an acrylic resin formed body
- polycarbonate resin: a milling swarf of a polycarbonate resin formed body
- protective film: a cut piece of a commercially available polyethylene film used for surface protection of a resin formed body
- machine oil: "CRE 5-56" manufactured by KURE Engineering Ltd.
- bismuth (Bi): granular Bi manufactured by FUJIFILM Wako Pure Chemical Corporation
- hard coat material: a hard coat material obtained by milling a commercially available lens having a hard coat
- dimethyl tin dichloride: a polymerization catalyst, dimethyl tin dichloride (trade name: NESTIN-P, manufactured by The Honjo Chemical Corporation)
- Plast Blue: a dye, PLAST BLUE 8514 manufactured by Arimoto Chemical Co., Ltd.
- Zelec-UN: a mold release agent, ZELEC-UN (manufactured by Stepan Company; acidic phosphoric acid ester)

[Example 12]

-Reaction Step-

The thiourethane resin swarf R1 (40 g) obtained in Reference Production Example 1 and 40 g of distilled water (i.e., "water" as a foreign material) were charged into a 300-mL flask equipped with a condenser to obtain a composition X1.

To this composition X1, monoethanolamine (manufactured by FUJIFILM Wako Pure Chemical Corporation) (15.8 g; 0.26 mol) and toluene (144 g) were added, and the resultant was heated with stirring for 9 hours in a 100°C oil bath to obtain a reaction mixture containing a polythiol composition as a thiourethane resin raw material (the above operations are hereinafter referred to as "reaction step").

-Separation Step (Separation Aspect A)-

The reaction mixture obtained in the reaction step was subjected to the separation step according to the above-described separation aspect A including acid washing and the like, whereby the polythiol composition was separated from the reaction mixture. The details of this process will now be described.

The reaction mixture obtained in the reaction step was cooled to room temperature, and solid was subsequently removed by filtration to obtain a filtrate containing the polythiol composition.

To the thus obtained filtrate, 20 g of 35% hydrochloric acid was charged, and the resultant was stirred, liquid-separated, and then washed twice with 100 mL of water to obtain a toluene solution of the polythiol composition.

From the thus obtained toluene solution, toluene was distilled away using a rotary evaporator. The resulting mixture was sequentially subjected to removal of a low-boiling-point component by a vacuum pump and filtration through a 3-micron PTFE membrane filter in this order, whereby 9.3 g of a polythiol composition containing the polythiol component T2 as a main component was obtained (the above operations are hereinafter referred to as "separation step").

The results of analyzing the SH value in the thus obtained polythiol composition and the purity of the polythiol component T2 based on high-performance liquid chromatography were as shown in Table 2 below.

[Example 13]

-Reaction Step-

The thiourethane resin swarf R1 (40 g) obtained in Reference Production Example 1 and 40 g of distilled water (i.e., "water" as a foreign material) were charged into a 300-mL flask equipped with a condenser and a Dean-Stark apparatus to obtain a composition X1.

To this composition X1, monoethanolamine (manufactured by FUJIFILM Wako Pure Chemical Corporation) (15.8 g; 0.26 mol) and toluene (144 g) were added, and the resultant was heated with stirring for 5 hours in a 120°C oil bath while removing water by distillation to obtain a reaction mixture containing a polythiol composition (the above operations are hereinafter referred to as "reaction step").

-Separation Step (Separation Aspect A)-

The reaction mixture obtained in the reaction step was subjected to the separation step according to the separation aspect A including acid washing and the like in the same manner as in Example 12, whereby the polythiol composition was separated from the reaction mixture.

The results of analyzing the SH value in the thus obtained polythiol composition and the purity of the polythiol component T2 based on high-performance liquid chromatography were as shown in Table 2 below.

[Table 1]

| | | Example 1 | Example 2 | Example 3 | Example 4 | Example 5 | Example 6 | Example 7 |
|---|---|---|---|---|---|---|---|---|
| Composition X1 | Foreign material | CR-39 | polyurethane resin | acrylic resin | polycarbonate resin | protective film | machine oil | bismuth |
| | Amount (parts by mass) of foreign material with respect to 100 parts by mass of thiourethane resin | 10 | 4.3 | 8 | 7.9 | 0.18 | 10 | 10 |
| Reaction step | Charged equivalent [amine compound! thiourethane resin] | 1.2 | 1.2 | 1.2 | 1.2 | 1.2 | 1.2 | 1.2 |
| Separation step | | Separation aspect B (e.g., extraction) | Separation aspect B (e.g., extraction) | Separation aspect B (e.g., extraction) | Separation aspect B (e.g., extraction) | Separation aspect B (e.g., extraction) | Separation aspect B (e.g., extraction) | Separation aspect B (e.g., extraction) |
| Polythiol composition TB | SH value (mmol/g) | 11.44 | 11.22 | 10.92 | 11.20 | 10.73 | 11.39 | 10.32 |
| | Purity of polythiol component T2 (% by area) | 80.6 | 83.4 | 82.2 | 66.0 | 84.4 | 85.0 | 85.3 |
| | Outer appearance | transparent | transparent | transparent | transparent | transparent | transparent | transparent |

[Table 2]

| | | Example 8 | Example 9 | Example 10 | Example 11 | Example 12 | Example 13 |
|---|---|---|---|---|---|---|---|
| Composition X1 | Foreign material | hard coat material | dimethyl tin dichloride | Plast Blue | Zelec-UN | water | water |
| | Amount (parts by mass) of foreign material with respect to 100 parts by mass of thiourethane resin | trace amount | 1 | 0.01 | 10 | 100 | 100 |
| Separation step | | Separation aspect B (e.g., extraction) | Separation aspect B (e.g., extraction) | Separation aspect B (e.g., extraction) | Separation aspect B (e.g., extraction) | Separation aspect A (e.g., acid washing) | Separation aspect A (e.g., acid washing) |
| Polythiol composition TB | SH value (mmol/g) | 11.45 | 10.35 | 11.43 | 12.09 | 10.28 | 11.09 |
| | Purity of polythiol component T2 (% by area) | 82.7 | 85.6 | 92.1 | 85.3 | 83.1 | 87.3 |
| | Outer appearance | transparent | transparent | transparent | transparent | transparent | transparent |

As shown in Tables 1 and 2, in all of Examples 1 to 13, the reaction step of contacting the composition X1 containing a thiourethane resin and a foreign material with an amine compound used as an active hydrogen compound caused the thiourethane resin in the composition X1 and the amine compound to react with each other, as a result of which a polythiol composition TB was generated as a thiourethane resin raw material.

Further, in these Examples 1 to 13, by subjecting each reaction mixture obtained in the reaction step to the separation step, a polythiol composition TB having excellent purity of the polythiol component T2 was separated from the reaction mixture.

[Example 101]

(Production of Formed Body Containing Thiourethane Resin)

A formed body containing a thiourethane resin was obtained by performing the same operations as in the production of a formed body in Reference Production Example 1, except that the polythiol composition TA (49.2 parts by mass) was changed to the polythiol composition TB (49.2 parts by mass) obtained in Example 1.

The thus obtained formed body had favorable transparency and favorable outer appearance with no distortion.

Performance tests were conducted for the thus obtained formed body.

The results thereof are shown in Table 3.

The items of the performance tests were optical properties (refractive index and Abbe number), heat resistance, and hue.

These items were tested by the following respective test methods.

- Refractive index (ne) and Abbe number (ve): using a Pulfrich refractometer KPR-30 manufactured by Shimadzu Corporation, the refractive indices (ne, nF', and nC') were measured at wavelengths of 546.1 nm (mercury e-line), 480.0 nm (Cd F'-line), and 643.9 nm (Cd C'-line), respectively, and the refractive index (ne) and the Abbe number (ve) were determined.
- Heat resistance: using a thermomechanical analyzer TMA-60 manufactured by Shimadzu Corporation, the glass transition temperature (Tg) was measured by a TMA penetration method (load: 50 g, pin tip: 0.5 mm$\varphi$, heating rate: 10°C/min), and the measured value was used as an index of the heat resistance.
- Yellowness (YI): using a spectrophotometer (CM-5, manufactured by Konica Minolta, Inc.), the yellowness (YI) was measured in the form of a 2 mm-thick flat plate, and the measured value was used as an index of the hue in an optical material.

[Examples 102 to 113]

The same operations as in Example 101 were performed, except that the polythiol composition TB obtained in Example 1 (49.2 parts by mass) was changed to the respective polythiol compositions TB obtained in Examples shown in Table 3.

The results thereof are shown in Table 3.

In Table 3, "Composition TA" means the polythiol composition TA used in Reference Production Example 1, and "Example 1" to "Example 13" mean the respective polythiol compositions TB obtained in Examples 1 to 13.

[Table 3]

| | Polymerizable composition (parts by mass in parentheses) | | Amount of catalyst used (ppm) | Performance tests of formed body | | | | |
|---|---|---|---|---|---|---|---|---|
| | Isocyanate compound | Polythiol composition | | Optical properties | | Heat resistance | Hue | Outer appearance |
| | | | | Refractive index | Abbe number | Tg (°C) | YI | |
| Reference Production Example 1 | XDI (51) | Composition TA (49) | 100 | 1.669 | 31 | 99 | 0.76 | transparent resin |
| Example 101 | XDI (51) | Example 1 (49) | 100 | 1.669 | 32 | 101 | 2.70 | transparent resin |
| Example 102 | XDI (51) | Example 2 (49) | 100 | 1.669 | 31 | 100 | 1.29 | transparent resin |
| Example 103 | XDI (51) | Example 3 (49) | 100 | 1.669 | 31 | 102 | 2.12 | transparent resin |
| Example 104 | XDI (51) | Example 4 (49) | 100 | 1.669 | 31 | 99 | 2.90 | transparent resin |
| Example 105 | XDI (51) | Example 5 (49) | 100 | 1.670 | 32 | 100 | 2.11 | transparent resin |
| Example 106 | XDI (51) | Example 6 (49) | 100 | 1.669 | 31 | 101 | 1.62 | transparent resin |
| Example 107 | XDI (51) | Example 7 (49) | 100 | 1.670 | 33 | 102 | 1.33 | transparent resin |
| Example 108 | XDI (51) | Example 8 (49) | 100 | 1.669 | 31 | 101 | 1.96 | transparent resin |
| Example 109 | XDI (51) | Example 9 (49) | 100 | 1.669 | 31 | 101 | 2.23 | transparent resin |
| Example 110 | XDI (51) | Example 10 (49) | 100 | 1.669 | 31 | 105 | 1.42 | transparent resin |
| Example 111 | XDI (51) | Example 11 (49) | 100 | 1.668 | 31 | 101 | 2.12 | transparent resin |

(continued)

| Polymerizable composition (parts by mass in parentheses) | | Amount of catalyst used (ppm) | Performance tests of formed body | | | | | |
| | | | Optical properties | | Heat resistance | Hue | Outer appearance |
| Isocyanate compound | Polythiol composition | | Refractive index | Abbe number | Tg (°C) | YI | |
| Example 112 | XDI (51) | Example 12 (49) | 100 | 1.669 | 31 | 100 | 1.58 | transparent resin |
| Example 113 | XDI (51) | Example 13 (49) | 100 | 1.669 | 31 | 101 | 1.07 | transparent resin |

As shown in Table 3, the formed bodies of these Examples, which were produced using the polythiol compositions TB of the respective Examples (i.e., the polythiol compositions obtained by contacting the swarf-form composition X, which was obtained by milling the formed body of Reference Production Example 1, and an amine compound with each other), had performance comparable to those of the formed body of Reference Production Example 1.

[Example 201]

In the above-described Example 1, the filtrate generated by filtration in the separation step was used to produce a polythiol composition as a polyurethane resin raw material.

On the other hand, in the below-described Example 201, the filtration residue (i.e., solid) generated by filtration in the separation step of Example 1 was used to produce a polyamine compound as a polyurethane resin raw material.

In other words, in the reaction step of Example 1, the thiourethane resin in the composition X1 reacted with monoethanolamine (MEA) and was thereby decomposed into a polythiol composition as a thiourethane resin raw material and a polyurea compound as another thiourethane resin raw material (aminolysis), as a result of which a reaction mixture containing these thiourethane resin raw materials was obtained.

Filtration of this reaction mixture yielded a filtrate containing the polythiol composition as a thiourethane resin raw material (Example 1) and a filtration residue (i.e., solid) containing the polyurea compound as another thiourethane resin raw material (Example 201). Further, by reacting this polyurea compound and an amine compound with each other, a polyamine compound was obtained as a thiourethane resin raw material.

The details of Example 201 will now be described.

(First Step)

The solid (i.e., filtration residue) generated by filtration in the separation step of Example 1 was left to stand at room temperature and thereby dried to obtain 40.3 g of a mixture containing, as a main component, a urea body (polyurea compound) of *m*-xylylenediamine (XDA) and monoethanolamine (MEA) (this mixture is hereinafter also referred to as "polyurea-containing mixture P1").

It is noted here that the XDA constituting the urea body was derived from *m*-xylylene diisocyanate (XDI) contained in the polythiol composition TA that is a raw material of the thiourethane resin swarf R1 used as a raw material.

The monoethanolamine (MEA) constituting the urea body is the active hydrogen compound used for decomposition of the thiourethane resin swarf R1 (see the reaction step of Example 1 for details).

(Second Step)

In a 100-mL flask equipped with a condenser, the polyurea-containing mixture P1 (31.0 g) obtained in the first step was weighed, and 31.0 g (0.30 mol) of diethylenetriamine (DET) as an amine compound (manufactured by FUJIFILM Wako Pure Chemical Corporation) was added thereto, followed by heating at 145°C for 3 hours. Subsequently, to the resultant, 16.0 g (0.40 mol) of sodium hydroxide (NaOH) was added, and this was followed by heating at 145°C for 3 hours to obtain a second reaction mixture.

After diluting this second reaction mixture with addition of methanol, the resulting diluted solution was vacuum-filtered to remove by-produced sodium carbonate.

The thus obtained filtrate was vacuum-concentrated to obtain a mixed amine mass.

The thus obtained mixed amine mass was sampled, and the concentration of XDA in the second reaction mixture (hereinafter, also referred to as "GC concentration") was determined by gas chromatography analysis.

The result thereof is shown in Table 4.

Further, assuming that the whole amount of the polyurea-containing mixture obtained in the first step was the urea body (polyurea compound) of XDA and MEA, the XDA generation ratio (hereinafter, also referred to as "GC yield") was determined based on the GC concentration. The result thereof was as shown in Table 4.

It is noted here that XDA is a polyamine compound generated as a thiourethane resin raw material, which is a target material.

[Examples 202 to 211]

The same operations as in Example 201 were performed, except that the solid (i.e., filtration residue) generated in the separation step of Example 1 was changed to the respective solids (i.e., filtration residues) generated in the separation step of Examples 2 to 11.

The GC concentration and the GC yield of XDA in the resulting second reaction mixtures are shown in Tables 4 and 5.

[Table 4]

| | | | Example 201 | Example 202 | Example 203 | Example 204 | Example 205 | Example 206 | Example 207 |
|---|---|---|---|---|---|---|---|---|---|
| First step | Composition X1 | | Example 1 | Example 2 | Example 3 | Example 4 | Example 5 | Example 6 | Example 7 |
| | Polyurea-containing mixture P1 | Yield (g) | 40.3 | 38.3 | 37.0 | 41.1 | 37.2 | 38.9 | 41.4 |
| Second step | Polyurea-containing mixture P1 | Charged amount (g) | 31.0 | 31.0 | 31.0 | 31.0 | 31.0 | 31.02 | 31.0 |
| | Polyamine compound (thiourethane resin raw material) | Type | XDA | XDA | XDA | XDA | XDA | XDA | XDA |
| | | GC concentration (%) | 16.1 | 14.3 | 12.5 | 11.1 | 13.3 | 10.6 | 8.1 |
| | | GC yield (%) | 72.0 | 64.3 | 60.2 | 51.3 | 64.0 | 47.3 | 33.2 |

[Table 5]

|  |  |  | Example 208 | Example 209 | Example 210 | Example 211 |
|---|---|---|---|---|---|---|
| First step | Composition X1 | | Example 8 | Example 9 | Example 10 | Example 11 |
| | Polyurea-containing mixture P1 | Yield (g) | 37.9 | 38.9 | 35.9 | 38.0 |
| Second step | Polyurea-containing mixture P1 | Charged amount (g) | 31.0 | 31.0 | 31.0 | 31.0 |
| | Polyamine compound (thiourethane resin raw material) | Type | XDA | XDA | XDA | XDA |
| | | GC concentration (%) | 10.1 | 15.2 | 13.3 | 14.7 |
| | | GC yield (%) | 50.7 | 77.4 | 72.3 | 79.9 |

As shown in Tables 4 and 5, in Examples 201 to 211, the reaction step of contacting the composition X1 containing a thiourethane resin and a foreign material with an amine compound (monoethanolamine(MEA)) used as an active hydrogen compound caused the thiourethane resin in the composition X1 and the amine compound (MEA) to react with each other, as a result of which a polyurea compound was obtained as a thiourethane resin raw material (this process is the "first step"), and a polyamine compound (XDA) was obtained as another thiourethane resin raw material by reacting the polyurea compound and an amine compound (DET) with each other (this process is the "second step").

Further, by reacting the polyamine compound (XDA) and phosgene with each other, a polyisocyanate compound (XDI: xylylene diisocyanate), which is a more direction thiourethane resin raw material, can be obtained.

«Examples and Comparative Examples of Embodiment A»

Examples and Comparative Examples of the embodiment A (i.e., an embodiment in which, in the method of producing a thiourethane resin raw material according to the disclosure, the foreign material, the active hydrogen compound, and the thiourethane resin raw material are limited to a combination of an UV absorber, an amine compound, and a polythiol composition, respectively) will now be described.

The term "UV absorber" hereinafter means an ultraviolet absorber.

Hereinafter, the purity (% by mass) of a polythiol component T1 in a polythiol composition means the content (% by mass) of the polythiol component T1 with respect to a total amount of the polythiol composition, more specifically the content (% by mass) of the polythiol component T1 with respect to a total amount of the polythiol composition, which content is determined by high-performance liquid chromatography under the following conditions using an internal standard substance.

Similarly, the content (% by mass) of a UV absorber in a polythiol composition means the content (% by mass) of the UV absorber with respect to a total amount of the polythiol composition, more specifically the content (% by mass) of the UV absorber with respect to a total amount of the polythiol composition, which content is determined by high-performance liquid chromatography under the following conditions using an internal standard substance.

(Conditions of High-Performance Liquid Chromatography)

Column: YMC-Pack ODS-AA-312 (S5 Φ6 mm × 150 mm)
Mobile phase: measurement was performed while changing the concentration from acetonitrile/0.01M aqueous potassium dihydrogen phosphate solution = 60/40 (vol/vol) to acetonitrile/0.01M aqueous potassium dihydrogen phosphate solution = 80/20 (vol/vol)
Column temperature: 40°C
Flow rate: 1.0 mL/min
Detector: UV detector, wavelength: 230 nm
Preparation of measurement solution: 150 mg of an internal standard substance (1,2,4-trimethylbenzene) and 160 mg of a sample are dissolved and mixed with 5 mL of acetonitrile.

Injection amount: 1 μL

[Reference Production Example 301]

(Production of Formed Body 301 Containing Thiourethane Resin and UV Absorber)

In a flask equipped with a stirrer,

dimethyl tin dichloride (100 ppm by mass with respect to a total amount of the below-described polyisocyanate compound and the below-described polythiol composition) as a polymerization catalyst,
TINUVIN 329 (manufactured by BASF Japan Ltd., 2-(2H-benzotriazol-2-yl)-4-*tert*-octylphenol) (1.5 parts by mass) as a UV absorber,
ZELEC-UN (manufactured by Stepan Company; acidic phosphoric acid ester) (1,000 ppm by mass with respect to a total amount of the below-described polyisocyanate compound and the below-described polythiol composition) as a mold release agent,
*m*-xylylene diisocyanate (XDI) (52 parts by mass) as a polyisocyanate compound, and
a polythiol composition TC (48 parts by mass) containing 4-mercaptomethyl-1,8-dimercapto-3,6-dithiaoctane (i.e., polythiol component T1) as a main component
were added and mixed with stirring for 1 hour at room temperature (25°C) to obtain a polymerizable composition in the form of a transparent homogeneous solution.

It is noted here that the purity of the polythiol component T1 in the polythiol composition TC (i.e., the content of the polythiol component T1 with respect to a total amount of the polythiol composition TC) was 92.2%.
Next, the thus obtained polymerizable composition was vacuum-filtered through a polytetrafluoroethylene (PTFE) filter, and then thoroughly degassed under a reduced pressure of 600 Pa until foaming was no longer observed. The thus degassed polymerizable composition was injected between a pair of glass molds immobilized by a tape, and then, this pair of glass molds was placed in an oven, after which the oven internal temperature was set at 10°C. Subsequently, the oven internal temperature was raised from 10°C to 120°C over a period of 38 hours. By this process, monomers (the polyisocyanate compound and the polythiol composition) contained in the degassed polymerizable composition were polymerized to form a formed body containing a thiourethane resin and the UV absorber (i.e., a cured product of the polymerizable composition) between the pair of glass molds.
Thereafter, the inside of the oven was cooled, and the pair of glass molds was subsequently taken out of the oven, after which the formed body was removed from the pair of glass molds to obtain a formed body 301 containing the thiourethane resin and the UV absorber.

(Production of Swarf-Form Composition X301)

A lens was produced by milling the thus obtained formed body 301. A milling swarf generated in this process was collected and applied to a sieve having a nominal mesh size of 1 mm as defined by JIS Z-8801-1:2019, and the swarf passed through the sieve was recovered, whereby a swarf-form composition X301 was obtained as a composition XA containing the thiourethane resin and the UV absorber.

[Reference Production Example 302]

(Production of Formed Body 302 Containing Thiourethane Resin and UV Absorber)

A formed body 302 containing a thiourethane resin and a UV absorber was obtained by performing the same operations as in Reference Production Example 301, except that the amount of TINUVIN 329 used as the UV absorber was changed from 1.5 parts by mass to 0.05 parts by mass.

(Production of Swarf-Form Composition X302)

A lens was produced by milling the thus obtained formed body 302. A milling swarf generated in this process was collected and applied to a sieve having a nominal mesh size of 1 mm as defined by JIS Z-8801-1:2019, and the swarf passed through the sieve was recovered, whereby a swarf-form composition X302 was obtained as a composition XA containing the thiourethane resin and the UV absorber.

[Example 301]

-Reaction Step-

The whole amount of the swarf-form composition X301 (100 g) obtained in Reference Production Example 301 [composition X] was charged into a 500-mL flask equipped with a condenser, and monoethanolamine (manufactured by FUJIFILM Wako Pure Chemical Corporation) (40.5 g; 0.663 mol) and toluene (193 g) were added thereto, and the resultant was heated with stirring at 90°C for 7 hours to obtain a reaction mixture containing a polythiol composition (the above operations are hereinafter referred to as "reaction step").

-Separation Step (Separation Aspect B)-

The reaction mixture obtained in the reaction step was subjected to the separation step according to the separation aspect B including extraction and the like, whereby the polythiol composition was separated from the reaction mixture. The details of this process will now be described.

The reaction mixture obtained in the reaction step was cooled to 60°C, and solid was subsequently removed by filtration. To the thus obtained filtrate, 70.5 g of 31% aqueous sodium hydroxide solution was added, followed by stirring. To this resultant, 75 g of water was added to extract soluble components, and the resulting water extract was washed with 50 g of toluene, followed by addition of 75 g of 35% hydrochloric acid and stirring. Soluble components were extracted from the thus obtained aqueous liquid with 120 g of toluene to obtain a toluene extract. This toluene extract was washed with 80 g of water, subsequently with 80 g of 0.1% aqueous ammonia, and then twice with 80 g of water, whereby a toluene solution of the polythiol composition was obtained.

From the thus obtained toluene solution, toluene was distilled away using a rotary evaporator. The resulting mixture was sequentially subjected to removal of a low-boiling-point component by a vacuum pump and filtration through a 1-micron PTFE membrane filter in this order, whereby 33.38 g of a polythiol composition containing 4-mercaptomethyl-1,8-dimercapto-3,6-dithiaoctane (i.e., polythiol component T1) as a main component was obtained (the above operations are hereinafter referred to as "separation step").

(Measurement)

For the thus obtained polythiol composition, the following measurements were performed.
The results thereof are shown in Table 6.

-Purity (% by mass) of Polythiol Component T1 and Content (% by mass) of UV Absorber-

The purity (% by mass) of the polythiol component T1 in the polythiol composition and the content (% by mass) of the UV absorber in the polythiol composition were each measured by high-performance liquid chromatography under the above-described conditions.

-SH Value (mmol/g)-

Using an automatic potentiometric titrator manufactured by Kyoto Electronics Manufacturing Co., Ltd. and a 0.05-mol/L iodine solution (manufactured by FUJIFILM Wako Pure Chemical Corporation), the SH value (mmol/g) in the polythiol composition (i.e., the number of millimoles of thiol groups per 1 g of the polythiol composition; the same applies hereinafter) was measured.

-Incorporation Rate (% by mass) of UV Absorber in Polythiol Composition-

Based on the charged amounts of the raw materials used for obtaining the formed body 301, the mass of the UV absorber in the starting material (swarf-form composition X301 (100 g)) was determined (hereinafter, referred to as "mass M1").
Based on the amount of the polythiol composition obtained in the separation step (33.38 g) and the content (% by mass) of the UV absorber, the mass of the UV absorber in the polythiol composition was determined (hereinafter, referred to as "mass M2").
Based on the thus determined mass M1 and mass M2, the incorporation rate (% by mass) of the UV absorber in the polythiol composition was calculated by the following equation:

Incorporation rate (% by mass) of UV absorber in polythiol composition = (mass M2/mass M1) × 100

-Refractive Index-

For the polythiol composition, the refractive index was measured using a refractometer RA-600 manufactured by Kyoto Electronics Manufacturing Co., Ltd.

-YI (Yellowness), L*, a*, and b*-

For the polythiol composition, YI (yellowness) as well as L*, a*, and b* in the CIE 1976 (L*,a*,b*) color system were measured using a spectrophotometer (CM-5, manufactured by Konica Minolta, Inc.) at a cell length of 1 cm.

-Outer Appearance-

The outer appearance of the above-obtained polythiol composition was visually observed.

[Example 302]

-Reaction Step-

The whole amount of the swarf-form composition X302 (200 g) obtained in Reference Production Example 302 [composition XA] was charged into a 1,000-mL flask equipped with a condenser, and monoethanolamine (manufactured by FUJIFILM Wako Pure Chemical Corporation) (81.0 g; 1.326 mol) and 386 g of toluene were added thereto, and the resultant was heated with stirring at 90°C for 5 hours to obtain a reaction mixture containing a polythiol composition (the above operations are hereinafter referred to as "reaction step").

-Separation Step (Separation Aspect B)-

The reaction mixture obtained in the reaction step was subjected to the separation step according to the separation aspect B including extraction and the like, whereby the polythiol composition was separated from the reaction mixture. The details of this process will now be described.
The reaction mixture obtained in the reaction step was cooled to 60°C, and solid was subsequently removed by filtration. To the thus obtained filtrate, 143 g of 31% aqueous sodium hydroxide solution was added, followed by stirring. To this resultant, 150 g of water was added to extract soluble components, and the resulting water extract was washed with 50 g of toluene, followed by addition of 150 g of 35% hydrochloric acid and stirring. Soluble components were extracted from the thus obtained aqueous liquid with 200 g of toluene to obtain a toluene extract. This toluene extract was washed with 160 g of water, subsequently with 160 g of 0.1 % aqueous ammonia, and then twice with 160 g of water, whereby a toluene solution of the polythiol composition was obtained.
From the thus obtained toluene solution, toluene was distilled away using a rotary evaporator. The resulting mixture was sequentially subjected to removal of a low-boiling-point component by a vacuum pump and filtration through a 1-micron PTFE membrane filter in this order, whereby 74.15 g of a polythiol composition containing 4-mercaptomethyl-1,8-dimercapto-3,6-dithiaoctane (i.e., polythiol component T1) as a main component was obtained (the above operations are hereinafter referred to as "separation step").
For the thus obtained polythiol composition, the same measurements were performed as in Example 301.
The results thereof are shown in Table 6.

[Example 303]

The same operations as in Example 302 were performed, except that, in the separation step, an operation of removing toluene-insoluble matters from the toluene extract by filtration was added between the operation of obtaining the toluene extract and the operation of washing the toluene extract with 160 g of water.
The results thereof are shown in Table 6.
In this Example 303, a polythiol composition containing the polythiol component T1 as a main component was obtained in an amount of 80.02 g.

[Example 304]

The same operations as in Example 302 were performed, except that, in the reaction step, the operation of adding monoethanolamine (manufactured by FUJIFILM Wako Pure Chemical Corporation) (81.0 g; 1.326 mol) and 386 g of toluene was changed to an operation of adding monoethanolamine (manufactured by FUJIFILM Wako Pure Chemical Corporation) (94.5 g; 1.547 mol) and 372 g of toluene (simply put, the charged amounts of monoethanolamine and toluene were changed).

The results thereof are shown in Table 6.

In this Example 304, a polythiol composition containing the polythiol component T1 as a main component was obtained in an amount of 82.18 g.

[Example 305]

The same operations as in Example 301 were performed, except that the separation step according to the separation aspect B including extraction and the like was changed to the following separation step according to the separation aspect A including acid washing and the like.

The results thereof are shown in Table 6.

-Separation Step (Example 305) (Separation Aspect A)-

The reaction mixture obtained in the reaction step was subjected to the separation step according to the separation aspect A including acid washing and the like, whereby the polythiol composition was separated from the reaction mixture. The details of this process will now be described.

The reaction mixture obtained in the reaction step was cooled to 60°C, and solid was subsequently removed by filtration. The resulting filtrate was washed with 23 g of 35% hydrochloric acid to remove excess amine compound (i.e., monoethanolamine) from the filtrate (acid washing). The thus acid-washed filtrate was washed with 80 g of water, subsequently with 80 g of 0.1 % aqueous ammonia, and then twice with 80 g of water, whereby a toluene solution of the polythiol composition was obtained.

From the thus obtained toluene solution, toluene was distilled away using a rotary evaporator. The resulting mixture was sequentially subjected to removal of a low-boiling-point component by a vacuum pump and filtration through a 1-micron PTFE membrane filter in this order, whereby 43.20 g of a polythiol composition containing 4-mercaptomethyl-1,8-dimercapto-3,6-dithiaoctane (i.e., polythiol component T1) as a main component was obtained (the above operations are hereinafter referred to as "separation step").

[Example 306]

The same operations as in Example 302 were performed, except that the separation step according to the separation aspect B including extraction and the like was changed to the following separation step according to the separation aspect A including acid washing and the like.

The results thereof are shown in Table 6.

-Separation Step (Example 306) (Separation Aspect A)-

The reaction mixture obtained in the reaction step was subjected to the separation step according to the separation aspect A including acid washing and the like, whereby the polythiol composition was separated from the reaction mixture. The details of this process will now be described.

The reaction mixture obtained in the reaction step was cooled to 60°C, and solid was subsequently removed by filtration. The resulting filtrate was washed with 46 g of 35% hydrochloric acid to remove excess amine compound (i.e., monoethanolamine) from the filtrate (acid washing). The thus acid-washed filtrate was washed with 160 g of water, subsequently with 160 g of 0.1 % aqueous ammonia, and then twice with 160 g of water, whereby a toluene solution of the polythiol composition was obtained.

From the thus obtained toluene solution, toluene was distilled away using a rotary evaporator. The resulting mixture was sequentially subjected to removal of a low-boiling-point component by a vacuum pump and filtration through a 1-micron PTFE membrane filter in this order, whereby 88.58 g of a polythiol composition containing 4-mercaptomethyl-1,8-dimercapto-3,6-dithiaoctane (i.e., polythiol component T1) as a main component was obtained (the above operations are hereinafter referred to as "separation step").

[Table 6]

| | | Example 301 | Example 302 | Example 303 | Example 304 | Example 305 | Example 306 |
|---|---|---|---|---|---|---|---|
| Composition XA | Amount (parts by mass) of UV absorber with respect to 100 parts by mass of thiourethane resin | 1.5 | 0.05 | 0.05 | 0.05 | 1.5 | 0.05 |
| Reaction step | Charged equivalent [amine compound/thiourethane resin] | 1.2 | 1.2 | 1.2 | 1.4 | 1.2 | 1.2 |
| Separation step | | Separation aspect B (e.g., extraction) | Separation aspect B (e.g., extraction) | Separation aspect B (extraction and the like + filtration) | Separation aspect B (e.g., extraction) | Separation aspect A (e.g., acid washing) | Separation aspect A (e.g., acid washing) |
| Polythiol composition | SH value (mmol/g) | 11.35 | 11.55 | 11.76 | 11.53 | 10.33 | 11.43 |
| | Purity of polythiol component T1 (% by mass) | 91.0 | 93.1 | 95.5 | 97.8 | 91.5 | 92.1 |
| | Content of UV absorber (% by mass) | 0.05 | 0.0 | 0.0 | 0.0 | 3.3 | 0.1 |
| | Incorporation rate of UV absorber (% by mass) | 1.1 | 0.0 | 0.0 | 0.0 | 95 | 97 |
| | Refractive index | 1.6322 | 1.6323 | 1.6320 | 1.6313 | 1.6324 | 1.6326 |
| | YI | 1.55 | 0.44 | 0.43 | 0.55 | 15.32 | 1.88 |
| | a* | -0.32 | -0.02 | -0.02 | 0.01 | -2.74 | -0.34 |
| | b* | 0.96 | 0.39 | 0.38 | 0.29 | 9.73 | 1.13 |
| | L* | 99.9 | 100 | 100 | 100 | 100 | 99.2 |
| | Outer appearance | transparent | transparent | transparent | transparent | turbid | transparent |

As shown in Table 6, in all of Examples 301 to 306, the reaction step of contacting the composition XA containing a thiourethane resin and a UV absorber with an amine compound caused the thiourethane resin in the composition XA and the amine compound to react with each other, as a result of which a polythiol composition was generated.

Further, in these Examples 301 to 306, by subjecting each reaction mixture obtained in the reaction step to the separation step, a polythiol composition having excellent purity of the polythiol component T1 was separated from the reaction mixture.

Among Examples 301 to 306, particularly in Examples 301 to 304 in which the separation step according to the separation aspect B including extraction and the like was performed, the content of the UV absorber in the respective polythiol compositions and the incorporation rate of the UV absorber in the respective polythiol compositions (i.e., the ratio of the mass of the UV absorber in each polythiol composition with respect to the mass of the UV absorber in the starting material) were reduced.

[Example 401]

(Production of Formed Body Containing Thiourethane Resin)

A formed body containing a thiourethane resin was obtained by performing the same operations as in the production of a formed body in Reference Production Example 301, except that the polythiol composition TC (48 parts by mass) was changed to the polythiol composition (48 parts by mass) obtained in Example 302.

The thus obtained formed body had favorable transparency and favorable outer appearance with no distortion.

Performance tests were conducted for the thus obtained formed body.

The results thereof are shown in Table 7.

The items of the performance tests were optical properties (refractive index and Abbe number), heat resistance, and hue.

These items were tested by the following respective test methods.

- Refractive index (ne) and Abbe number (ve): using a Pulfrich refractometer KPR-30 manufactured by Shimadzu Corporation, the refractive indices (ne, nF', and nC') were measured at wavelengths of 546.1 nm (mercury e-line), 480.0 nm (Cd F'-line), and 643.9 nm (Cd C'-line), respectively, and the refractive index (ne) and the Abbe number (ve) were determined.
- Heat resistance: using a thermomechanical analyzer TMA-60 manufactured by Shimadzu Corporation, the glass transition temperature (Tg) was measured by a TMA penetration method (load: 50 g, pin tip: 0.5 mmφ, heating rate: 10°C/min), and the measured value was used as an index of the heat resistance.
- Yellowness (YI): using a spectrophotometer (CM-5, manufactured by Konica Minolta, Inc.), the yellowness (YI) was measured in the form of a 9 mm-thick flat plate, and the measured value was used as an index of the hue in an optical material.

The same performance tests were conducted also for the formed body obtained in the above-described Reference Production Example 301.

The results thereof are shown in Table 7.

[Examples 402 and 403]

The same operations as in Example 401 were performed, except that the polythiol composition (48 parts by mass) obtained in Example 302 was changed to the respective polythiol compositions shown in Table 7.

The results thereof are shown in Table 7.

In Table 7, "Composition TC" means the polythiol composition TC used in Reference Production Example 301, and "Example 302", "Example 304", and "Example 306" mean the polythiol compositions obtained in Examples 302, 304, and 306 as shown in Table 6, respectively.

[Table 7]

| | Polymerizable composition (parts by mass in parentheses) | | Amount of catalyst used (ppm) | Performance tests of formed body | | | |
|---|---|---|---|---|---|---|---|
| | Isocyanate compound | Polythiol composition | | Optical properties | | Heat resistance | Hue |
| | | | | Refractive index | Abbe number | Tg (°C) | YI |
| Reference Production Example 301 | XDI (52) | Composition TC (48) | 100 | 1.665 | 32 | 85.3 | 5.05 |
| Example 401 | XDI (52) | Example 302 (48) | 100 | 1.665 | 31 | 88.6 | 5.73 |
| Example 402 | XDI (52) | Example 304 (48) | 125 | 1.666 | 31 | 88.5 | 5.40 |
| Example 403 | XDI (52) | Example 306 (48) | 100 | 1.665 | 31 | 85.6 | 6.39 |

As shown in Table 7, the formed bodies of these Examples, which were produced using the polythiol compositions of the respective Examples (i.e., the polythiol compositions obtained by contacting the swarf-form composition X302, which was obtained by milling the formed body of Reference Production Example 302, and an amine compound with each other), had performance comparable to those of the formed body of Reference Production Example 301 and, particularly, these formed bodies were confirmed to exhibit an improved heat resistance.

Especially, the formed bodies of Examples 401 and 402, which were produced using the polythiol compositions obtained in Examples 302 and 304, respectively (in both of which the separation aspect B was applied), were confirmed to have a reduced YI and a superior hue as compared to the formed body of Example 403 which was produced using the polythiol composition obtained in Example 306 (in which the separation aspect A was applied).

The disclosures of Japanese Patent Application No. 2020-192462 filed on November 19, 2020 and Japanese Patent Application No. 2021-125570 filed on July 30, 2021 are hereby incorporated by reference in their entirety.

All the documents, patent applications, and technical standards that are described in the present specification are hereby incorporated by reference to the same extent as if each individual document, patent application, or technical standard is concretely and individually described to be incorporated by reference.

**Claims**

1. A method of producing a thiourethane resin raw material, the method comprising a reaction step of generating a thiourethane resin raw material by contacting a composition X, which comprises a thiourethane resin and a foreign material, and an active hydrogen compound with each other, and thereby reacting the thiourethane resin in the composition X, and the active hydrogen compound, with each other.

2. The method of producing a thiourethane resin raw material according to claim 1, wherein the foreign material comprises at least one selected from the group consisting of a resin other than the thiourethane resin, a polymerization catalyst, a metal, a UV absorber, an internal mold release agent, a plasticizer, a dye, a machine oil, and water.

3. The method of producing a thiourethane resin raw material according to claim 1 or 2, wherein the thiourethane resin raw material comprises at least one selected from the group consisting of a polythiol composition, a polyurea compound, a polycarbamate compound, a polyamine compound, a polyisocyanate compound, and a polyurethane compound.

4. The method of producing a thiourethane resin raw material according to any one of claims 1 to 3, wherein the active hydrogen compound is at least one selected from the group consisting of an amine compound and an alcohol compound.

5. The method of producing a thiourethane resin raw material according to any one of claims 1 to 4, wherein the reaction step is a step of obtaining a reaction mixture comprising the thiourethane resin raw material by contacting the composition X and the active hydrogen compound with each other in the presence of a reaction solvent, and thereby reacting the thiourethane resin in the composition X, and the active hydrogen compound, with each other, and the method further comprises a separation step of separating the thiourethane resin raw material from the reaction mixture comprising the thiourethane resin raw material.

6. The method of producing a thiourethane resin raw material according to claim 5, wherein:

   the thiourethane resin raw material comprises a polythiol composition, and
   the separation step comprises:

   filtering the reaction mixture comprising the thiourethane resin raw material to obtain a filtrate comprising the polythiol composition;
   adding an alkali metal-containing base and then water to the filtrate comprising the polythiol composition to perform extraction and thereby obtain a water extract comprising an alkali metal salt of the polythiol composition;
   adding an acid to the water extract comprising an alkali metal salt of the polythiol composition to obtain an aqueous liquid comprising the polythiol composition;
   adding an extraction solvent to the aqueous liquid comprising the polythiol composition to perform extraction and thereby obtain an extract comprising the polythiol composition; and
   separating the polythiol composition from the extract comprising the polythiol composition.

7. The method of producing a thiourethane resin raw material according to any one of claims 1 to 6, wherein the composition X is collected in at least one of an eyeglass lens production process, an eyeglass production process, or an eyeglass disposal process.

8. The method of producing a thiourethane resin raw material according to any one of claims 1 to 7, wherein the composition X comprises a milling swarf comprising the thiourethane resin and the foreign material.

9. A method of producing a polymerizable composition, the method comprising:

   a step of producing a thiourethane resin raw material by the method of producing a thiourethane resin raw material according to any one of claims 1 to 8; and
   a step of producing a polymerizable composition by using at least a portion of the thiourethane resin raw material as at least a portion of a raw material.

10. A method of producing a resin, the method comprising:

   a step of producing a polymerizable composition by the method of producing a polymerizable composition according to claim 9; and
   a step of obtaining a resin by curing the polymerizable composition.

11. A method of producing a resin-containing formed body, the method comprising:

   a step of producing a polymerizable composition by the method of producing a polymerizable composition according to claim 9; and
   a step of obtaining a resin-containing formed body by curing the polymerizable composition.

12. A method of producing an optical material comprising a resin-containing formed body, the method comprising:

   a step of producing a polymerizable composition by the method of producing a polymerizable composition according to claim 9; and
   a step of obtaining a resin-containing formed body by curing the polymerizable composition.

13. A method of producing a lens comprising a resin-containing formed body, the method comprising:

   a step of producing a polymerizable composition by the method of producing a polymerizable composition according to claim 9; and
a step of obtaining a resin-containing formed body by curing the polymerizable composition.

14. A polymerizable composition, comprising at least a portion of a thiourethane resin raw material obtained by the method of producing a thiourethane resin raw material according to any one of claims 1 to 8.

15. A resin, which is a cured product of the polymerizable composition according to claim 14.

16. A formed body, comprising the resin according to claim 15.

17. An optical material, comprising the formed body according to claim 16.

18. A lens, comprising the formed body according to claim 16.

## INTERNATIONAL SEARCH REPORT

| International application No. |
| --- |
| **PCT/JP2021/042341** |

### A. CLASSIFICATION OF SUBJECT MATTER

*C07C 319/02*(2006.01)i; *C07C 319/20*(2006.01)i; *C07C 319/28*(2006.01)i; *C07C 321/14*(2006.01)i; *C08J 11/24*(2006.01)i; *C08J 11/28*(2006.01)i; *C08G 18/38*(2006.01)i; *G02B 1/00*(2006.01)i; *G02B 1/04*(2006.01)i

FI: C08J11/28 ZAB; C07C319/28; C07C321/14; G02B1/00; G02B1/04; C08G18/38 076; C08J11/24; C07C319/02; C07C319/20

According to International Patent Classification (IPC) or to both national classification and IPC

### B. FIELDS SEARCHED

Minimum documentation searched (classification system followed by classification symbols)

C07C319/00-321/30; C08J11/00-11/28; G02B1/00; G02B1/04; C08G18/00-18/87

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JST7580/JSTChina (JDreamIII)

### C. DOCUMENTS CONSIDERED TO BE RELEVANT

| Category* | Citation of document, with indication, where appropriate, of the relevant passages | Relevant to claim No. |
| --- | --- | --- |
| X | LI, Lingqiao et al. Reprocessable Polymer Networks via Thiourethane Dynamic Chemistry: Recovery of Cross-link Density after Recycling and Proof-of-Principle Solvolysis Leading to Monomer Recovery. Macromolecules. 2019, vol. 52, no. 21, pp. 8207-8216<br>p. 8209, left column, paragraphs [0002], [0004], right column, paragraphs [0002], [0008], pp. 8213-8214, right column, paragraphs [0003]-[0004], fig. 6, scheme 3 | 1-18 |
| X | HUANG, Sijia et al. Chemical recycling of poly(thiourethane) thermosets enabled by dynamic thiourethane bonds. Polymer Chemistry. 2020, vol. 11, no. 43, pp. 6879-6883<br>abstract, p. 6880, left column, line 2 from the bottom to right column, line 14, p. 6881, left column, line 5 from the bottom to p. 6882, left column, line 19 from the bottom, right column, line 11 to p. 6883, line 2 | 1-2, 5, 7-18 |
| X | WO 2015/088015 A1 (MITSUI CHEMICALS, INC) 18 June 2015 (2015-06-18)<br>claims 1-9 | 14-18 |
| X | JP 7-252207 A (MITSUI TOATSU CHEM INC) 03 October 1995 (1995-10-03)<br>claims 1-12 | 14-18 |

☑ Further documents are listed in the continuation of Box C.    ☑ See patent family annex.

| | |
| --- | --- |
| *   Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **13 January 2022** | **25 January 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
|---|
| **PCT/JP2021/042341** |

### C.    DOCUMENTS CONSIDERED TO BE RELEVANT

| Category* | Citation of document, with indication, where appropriate, of the relevant passages | Relevant to claim No. |
|---|---|---|
| P, X | WO 2021/157701 A1 (MITSUI CHEMICALS, INC) 12 August 2021 (2021-08-12) claims 1-23 | 1-18 |
| P, X | WO 2021/157702 A1 (MITSUI CHEMICALS, INC) 12 August 2021 (2021-08-12) claims 1-32 | 1-18 |
| A | JP 11-29653 A (KURABO IND LTD) 02 February 1999 (1999-02-02) entire text | 1-18 |
| A | CN 103483620 A (CHANGZHOU INSTITUTE OF ENGINEERING TECHNOLOGY) 01 January 2014 (2014-01-01) entire text | 1-18 |
| A | CN 105693982 A (GUANGZHOU PA CHEMICAL LIMITED) 22 June 2016 (2016-06-22) entire text | 1-18 |

Form PCT/ISA/210 (second sheet) (January 2015)

**INTERNATIONAL SEARCH REPORT**
Information on patent family members

International application No.

**PCT/JP2021/042341**

| Patent document cited in search report | | | Publication date (day/month/year) | Patent family member(s) | | | Publication date (day/month/year) |
|---|---|---|---|---|---|---|---|
| WO | 2015/088015 | A1 | 18 June 2015 | US 2016/0304701 A1 claims 1-9 EP 3081965 A1 CN 10-2016-0083914 A KR 10-2016-0083914 A | | | |
| JP | 7-252207 | A | 03 October 1995 | EP 665219 A1 claims 1-12 KR 10-1995-0023666 A CN 1111619 A US 5608115 A | | | |
| WO | 2021/157701 | A1 | 12 August 2021 | (Family: none) | | | |
| WO | 2021/157702 | A1 | 12 August 2021 | (Family: none) | | | |
| JP | 11-29653 | A | 02 February 1999 | (Family: none) | | | |
| CN | 103483620 | A | 01 January 2014 | (Family: none) | | | |
| CN | 105693982 | A | 22 June 2016 | (Family: none) | | | |

Form PCT/ISA/210 (patent family annex) (January 2015)

42

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S6346213 A
- JP H2270859 A
- JP H7252207 A
- JP S60199016 A
- JP S60217229 A
- WO 2007052329 A
- WO 2008047626 A
- JP 2002194083 A
- WO 2017047745 A
- JP 2020192462 A
- JP 2021125570 A